(19) Europäisches Patentamt
European Patent Office
Office européen des brevets

(11) **EP 3 950 795 B1**

(12) **EUROPEAN PATENT SPECIFICATION**

(45) Date of publication and mention
of the grant of the patent:
**25.12.2024 Bulletin 2024/52**

(21) Application number: **20783520.8**

(22) Date of filing: **27.03.2020**

(51) International Patent Classification (IPC):
**C08J 5/18** (2006.01)    **H01M 50/403** (2021.01)
**H01M 50/417** (2021.01)    **H01M 50/491** (2021.01)
**H01M 50/494** (2021.01)

(52) Cooperative Patent Classification (CPC):
**C08J 5/18; H01M 50/403; H01M 50/417;**
**H01M 50/491; H01M 50/494;** C08J 2323/06;
Y02E 60/10

(86) International application number:
**PCT/JP2020/014348**

(87) International publication number:
**WO 2020/203901 (08.10.2020 Gazette 2020/41)**

(54) **MICROPOROUS POLYOLEFIN FILM, SEPARATOR FOR BATTERY, SECONDARY BATTERY, AND METHOD FOR PRODUCING MICROPOROUS POLYOLEFIN FILM**

MIKROPORÖSE POLYOLEFINFOLIE, SEPARATOR FÜR BATTERIE, SEKUNDÄRBATTERIE UND VERFAHREN ZUR HERSTELLUNG EINER MIKROPORÖSEN POLYOLEFINFOLIE

FILM POLYOLÉFINIQUE MICROPOREUX, SÉPARATEUR POUR BATTERIE, BATTERIE SECONDAIRE ET PROCÉDÉ DE PRODUCTION DE FILM POLYOLÉFINIQUE MICROPOREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 JP 2019068113**
**29.03.2019 JP 2019068114**
**29.03.2019 JP 2019068115**

(43) Date of publication of application:
**09.02.2022 Bulletin 2022/06**

(73) Proprietor: **Toray Industries, Inc.**
**Tokyo 103-8666 (JP)**

(72) Inventors:
• **TOYOTA Naoki**
**Nasushiobara-shi, Tochigi 329-2763 (JP)**
• **TANAKA Hiroko**
**Nasushiobara-shi, Tochigi 329-2763 (JP)**
• **ISHIHARA Takeshi**
**Nasushiobara-shi, Tochigi 329-2763 (JP)**
• **NAKASHIMA Ryota**
**Nasushiobara-shi, Tochigi 329-2763 (JP)**
• **FUJIWARA Satoshi**
**Nasushiobara-shi, Tochigi 329-2763 (JP)**

(74) Representative: **Mewburn Ellis LLP**
**Aurora Building**
**Counterslip**
**Bristol BS1 6BX (GB)**

(56) References cited:
**JP-A- 2012 102 199    JP-A- 2015 037 791**
**JP-A- 2017 140 840    JP-A- 2018 193 496**

• **No further relevant documents disclosed**

Remarks:
The file contains technical information submitted after the application was filed and not included in this specification

EP 3 950 795 B1

# EP 3 950 795 B1

**Description**

TECHNICAL FIELD

The present invention relates to a polyolefin microporous membrane that is widely used as a separation membrane used for separation, selective permeation, and the like of substances, and an isolation member of an electrochemical reaction device such as an alkaline battery, a lithium secondary battery, a fuel cell, and a capacitor. In particular, the present invention is a polyolefin microporous membrane preferably used as a separator for a lithium ion battery, and is used as a separator exhibiting excellent battery characteristics and having high safety as compared with a polyolefin microporous membrane according to the related art.

BACKGROUND ART

A polyolefin microporous membrane is used as a filter, a separator for fuel cells, a separator for capacitors, and the like. In particular, the polyolefin microporous membrane is preferably used as a separator for lithium ion batteries widely used in laptop personal computers, mobile phones, digital cameras, and the like. The reason for this is that the polyolefin microporous membrane has excellent mechanical strength, shutdown characteristics, and lithium ion permeability.

In particular, lithium ion secondary batteries are used in in-vehicle applications in recent years, so that it is necessary to shorten charging time and improve acceleration performance, and rapid charging (large-current charging) and an increase in power consumption (large-current discharging) are required as characteristics of batteries. Accordingly, further improvement of the output characteristics of the separator has been required.

In addition, with an increase in the cruising distance of an automobile, the capacity of a battery has been increased, and further reduction in the thickness of a separator has been demanded. However, when the thickness of the separator is reduced, the strength decreases. As a result, a short circuit (foreign matter resistance) due to an electrode or a foreign matter, or rupture (impact resistance) when the battery is impacted is likely to occur, and the safety of the battery decreases. Therefore, the separator is required to have a higher strength than before.

As a method of improving the output characteristics, in Patent Literatures 1 and 2, polyethylene (PE) and polypropylene (PP) are blended with each other to increase the porosity, and the number of pores, the pore diameter, and the curved path ratio are controlled to improve the ion conductivity.

As a method of improving the output characteristics, Patent Literatures 3 and 4 describe a method of improving the ion conductivity by controlling the fibril diameter, the pore diameter, and the surface porosity of the microporous membrane and reducing the film resistance.

In Patent Literature 5, pore structures on the surface and the inside are controlled to improve the impregnation property of an electrolytic solution, thereby improving the output characteristics.

As a method of increasing the strength, a method of increasing the stretching ratio, a method of increasing the resin concentration, or a method of using a raw material having a high molecular weight is generally adopted. Patent Literature 6 describes a method to improve the rupture resistance in which polyethylene having a molecular weight of 280,000 and polyethylene having a molecular weight of 2,000,000 are blended, the blend is stretched at 7.0 times in the MD direction and 6.4 times in the TD direction under the condition of a resin concentration of 32 wt%, and the stretched blend is washed and dried and then is stretched at 1.2 times (area magnification: 54 times).

Patent Literatures 7 and 8 describe a method of stretching HI-ZEX MILLION 145M at $6.4 \times 6.0$ times (area magnification: 38.4 times) under the condition of a resin concentration of 18%. Since polyethylene having a relatively high molecular weight is stretched at 38.4 times, a microporous membrane, which has a porosity of 30% to 60% and a puncture strength of 6.0 N/20 $\mu$m and is excellent in the output characteristics and the safety, is obtained.

Patent Literature 9 discloses a polyolefin microporous film defined by an effective diffusion coefficient in the thickness direction as shown by formula (1) defined therein of $\geq 4.20 \times 10^{-11}$, a Bruggeman index shown as $\alpha$ in formula (2) defined therein of $2.60 \leq \alpha \leq 5.00$ and a number of pores obtained by gas liquid method of $\geq 60$ pieces/$\mu$m.

CITATION LIST

PATENT LITERATURE

Patent Literature 1: JP-A-2017-140840
Patent Literature 2: JP-A-2003-231772
Patent Literature 3: JP-A-2011-192529
Patent Literature 4: JP-A-2003-86162

Patent Literature 5: JP-A-2012-48987
Patent Literature 6: JP-A-2006-124652
Patent Literature 7: JP-A-2018-147885
Patent Literature 8: JP-A-2018-147690
Patent Literature 9: JP 2012-102199 A

## SUMMARY OF INVENTION

### TECHNICAL PROBLEM

However, in the common microporous membranes as described in Patent Literatures 1 and 2, the porosity is increased and the number of pores and the number of through pores are increased to improve the output characteristics. As a result, good strength is not obtained.

The microporous membranes described in Patent Literatures 3 and 4 are microporous membranes having large pore diameters and high porosity in which relatively thick fibrils are formed, and good strength is not obtained.

In Patent Literature 5, it is considered that since the pore structures of the surface and the inside are different from each other, the permeation path of lithium ions is likely to be non-uniform. Therefore, the microporous membrane in the related art is insufficient for achieving both high output characteristics and strength required for in-vehicle applications and the like.

The microporous membrane obtained in Patent Literature 6 has a relatively high puncture strength of 5.5 to 5.9 N/20 $\mu$m and good rupture resistance is obtained. However, the microporous membrane has a relatively low porosity of 35% to 40% and does not have a porosity close to that of a high-output separator as shown in Patent Literatures 1 and 2, and there is room for improvement in output characteristics.

In Patent Literatures 7 and 8, the thickness of the separator is required to be reduced along with the increase in the capacity of the battery, and therefore there is room for improvement in the safety along with the reduction in the thickness.

In view of the above circumstances, an object of the present invention is to provide a polyolefin microporous membrane having an output characteristic and a strength superior to those according to the related art.

### SOLUTION TO PROBLEM

As a result of intensive studies to solve the above problems, the present inventors have found that in the first embodiment of the present invention, the output characteristics are improved since pores are fine and uniform by improving the opening property in a stretching step and the number of the ion permeation paths are increased by increasing the number of pores per unit volume as compared with a polyolefin microporous membrane according to the related art, and the strength and the thermal shrinkage rate are improved since stress is uniformly applied to the resin layer and a fine and uniform fibril structure is formed, and thus, high safety and output characteristics, which cannot be achieved in the related art, can be realized.

In addition, as a result of intensive studies to solve the above problems, the present inventors have found that in the second embodiment of the present invention, the output characteristics are improved since pores are fine and uniform by improving the opening property in a stretching step and the number of the ion permeation paths are increased by increasing the number of surface pores per unit area as compared with a polyolefin microporous membrane according to the related art, and the strength and the thermal shrinkage rate are improved since stress is uniformly applied to the resin layer and a fine and uniform fibril structure is formed, and thus, high safety and output characteristics, which cannot be achieved in the related art, can be realized.

Furthermore, as a result of intensive studies to solve the above problems, the present inventors have found that in the third embodiment of the present invention, the output characteristics are improved since pores are fine and uniform by improving the opening property in a stretching step and the number of the ion permeation paths are increased by increasing the surface opening ratio as compared with a polyolefin microporous membrane according to the related art, and the strength and the thermal shrinkage rate are improved since stress is uniformly applied to the resin layer and a fine and uniform fibril structure is formed, and thus, high safety and output characteristics, which cannot be achieved in the related art, can be realized.

That is, the following configurations are adopted in the present invention.

A polyolefin microporous membrane, in which a puncture strength Y (N) in terms of a membrane thickness of 10 $\mu$m and the number Z of surface pores per unit area (/$\mu$m$^2$) satisfy a relationship of the following formula (2): Y (N) >_ -0.06 $\times$ Z (/$\mu$m$^2$) + 9.4 Formula (2), and in which the puncture strength Y is 3.0 N or more.

In some embodiments of the above polyolefin microporous membrane, the number of surface pores is 40/$\mu$m$^2$ or more and 135/$\mu$m$^2$ or less.

A polyolefin microporous membrane, in which a puncture strength Y (N) in terms of a membrane thickness of 10

μm and a surface opening ratio W (%) satisfy a relationship of the following formula (3): Y (N) ≥ -0.11 × W (%) + 6.2 Formula (3), and the surface opening ratio W is 5% or more and 45% or less,

and in which the puncture strength Y is 3.0 N or more.

In some embodiments, the polyolefin microporous membrane according to any one of the above has an average pore diameter of less than 40 nm.

In some embodiments, the polyolefin microporous membrane according to any one of the above, both a tensile strength at break in an MD direction and a tensile strength at break in a TD direction are 180 MPa or more.

In some embodiments, the polyolefin microporous membrane according to any one of the above, has a toughness of 35,000 (MPa×%) or more.

In some embodiments, the polyolefin microporous membrane according to any one of the above has a porosity of 40% or more and less than 60%.

In some embodiments of the polyolefin microporous membrane according to any one of the above, a thermal shrinkage rate at 120°C in an MD direction, which is measured by thermomechanical analysis, is 15% or less.

In some embodiments of the polyolefin microporous membrane according to any one of the above, the polyolefin as the microporous membrane is polyethylene.

A battery separator, including the polyolefin microporous membrane according to any one of the above, is part of the present invention.

A secondary battery, including the battery separator according to the above, is part of the present invention.

Also part of the present invention is a method of producing the polyolefin microporous membrane according to any one of the above, the method including:

preparing a solution in which a content of ultrahigh molecular weight polyethylene having a weight average molecular weight of 1,000,000 or more is 5 to 30 mass% and a content of the polyolefin resin is less than 30 mass% when a total of the solvent and the polyolefin resin is 100 mass%;

forming an unstretched gel sheet by extruding the solution from a die and performing cooling and solidifying;

obtaining a stretched film by stretching the gel sheet at a temperature ranging from a crystal dispersion temperature of the gel sheet to a melting point of the gel sheet + 10°C such that an area magnification is 40 times or more;

extracting a plasticizer from the stretched film and drying the stretched film; and

performing at least one of heat treatment of the stretched film after drying and re-stretching of the stretched film after drying.

ADVANTAGEOUS EFFECTS OF INVENTION

The present invention can provide a polyolefin microporous membrane excellent in the safety, the output characteristics, and the strength as compared with a polyolefin microporous membrane according to the related art.

DESCRIPTION OF EMBODIMENTS

Hereinafter, embodiments of the present invention will be described in detail, but these embodiments are examples of desirable embodiments, and the present invention is not limited to the contents thereof but is defined by the claims. The polyolefin microporous membrane (hereinafter, may be simply referred to as a "microporous membrane") of the present invention includes a polyolefin microporous membrane according to a first embodiment of the present invention, and a polyolefin microporous membrane according to a second embodiment of the present invention, which will be described later.

Disclosed but not claimed herein is a polyolefin microporous membrane in which the puncture strength Y (N) in terms of a membrane thickness of 10 μm and the number X of pores per unit volume (/μm$^3$) satisfy a relationship of the following formula (1), and the number X of pores is 40/μm$^3$ or more.

$$Y\ (N) \geq -6.7 \times 10^{-3} \times X\ (/\mu m^3) + 4.5 \quad \text{Formula (1)}$$

In the polyolefin microporous membrane according to the first embodiment of the present invention, the puncture strength Y (N) in terms of a membrane thickness of 10 μm and the number Z of surface pores per unit area (/μm$^2$) satisfy a relationship of the following formula (2).

$$Y\ (N) \geq -0.06 \times Z\ (/\mu m^2) + 9.4 \quad \text{Formula (2)}$$

In the polyolefin microporous membrane according to the second embodiment of the present invention, the puncture strength Y (N) in terms of a membrane thickness of 10 μm and the surface opening ratio W (%) satisfy a relationship of the following formula (3), and the surface opening ratio W is 5% or more and 45% or less.

$$Y\ (N) \geq -0.11 \times W\ (\%) + 6.2 \qquad \text{Formula (3)}$$

Hereinafter, the present invention will be described in more detail.

[1] Polyolefin Resin

A raw material, such as a resin, in the polyolefin microporous membrane of the present invention does not need to have a single composition, and may be a composition obtained by combining a main raw material and an auxiliary raw material.

The resin is preferably a polyolefin resin, and may be a polyolefin resin mixture (polyolefin resin composition) including two or more kinds of polyolefin resins.

The raw material form of the polyolefin microporous membrane is preferably a polyolefin resin, and examples of the polyolefin resin include polyethylene, polypropylene, and the like. It is more preferable that the polyolefin resin has a single composition.

The polyolefin resin is preferably a homopolymer of ethylene, propylene, 1-butene, 4-methyl-1-pentene, 1-hexene, or the like, and particularly preferably a homopolymer (polyethylene) of ethylene. The polyethylene may be a copolymer containing a homopolymer of ethylene and other α-olefins.

Examples of the other α-olefins include propylene, butene-1, hexene-1, pentene-1, 4-methylpentene-1, octene or alkenes having more carbon atoms than octene, vinyl acetate, methyl methacrylate, and styrene.

As the polyolefin resin mixture, for example, a mixture of two or more kinds of ultrahigh molecular weight polyethylenes having different weight average molecular weights (Mw), a mixture of high density polyethylenes, a mixture of medium density polyethylenes, or a mixture of low density polyethylenes may be used, or a mixture of two or more kinds of polyethylenes selected from the group consisting of ultrahigh molecular weight polyethylenes, high density polyethylenes, medium density polyethylenes, and low density polyethylenes may be used. The polyolefin resin mixture may be a mixture of ultrahigh molecular weight polyethylene having an Mw of $1 \times 10^{-6}$ or more and polyethylene having an Mw of $1 \times 10^5$ or more and less than $9 \times 10^5$.

The weight average molecular weight of the ultrahigh molecular weight polyethylene to be used is preferably $1.0 \times 10^6$ or more and $1.0 \times 10^7$ or less. The weight average molecular weight is more preferably $1.1 \times 10^6$ or more, still more preferably $1.2 \times 10^6$ or more, particularly preferably $1.4 \times 10^6$ or more, yet still more preferably $1.7 \times 10^6$ or more, and most preferably $2.0 \times 10^6$ or more. The weight average molecular weight is more preferably $8.0 \times 10^6$ or less, still more preferably $6.0 \times 10^6$ or less, yet still more preferably $5.0 \times 10^6$ or less, and most preferably $4.0 \times 10^6$ or less. When the weight average molecular weight is $1.0 \times 10^6$ or more, the entanglement density of the amorphous region is increased, the uniformity of the opening is improved, and good output characteristics and strength can be obtained.

The molecular weight distribution (weight average molecular weight (Mw)/number average molecular weight (Mn)) of the ultrahigh molecular weight polyethylene is preferably within the range of 3.0 to 100 from the viewpoint of mechanical strength. In terms of the lower limit, the molecular weight distribution is more preferably 4.0 or more, still more preferably 5.0 or more, yet still more preferably 6.0 or more, and most preferably 8.0 or more. In terms of the upper limit, the molecular weight distribution is more preferably 80 or less, still more preferably 50 or less, yet still more preferably 20 or less, and most preferably 17 or less.

The ultrahigh molecular weight polyethylene may be used as the above polyolefin resin mixture. However, in the case where the ultrahigh molecular weight polyethylene is used alone, when the molecular weight distribution is less than 3.0, processability is poor, and further, when the molecular weight distribution is more than 100, there is a high possibility that defects and the like are likely to occur during processing due to an increase in a low molecular weight component.

In addition to the ultrahigh molecular weight polyethylene, for example, polyethylene having a weight average molecular weight of less than $1.0 \times 10^6$, such as a range of $1.0 \times 10^5$ or more and less than $1.0 \times 10^6$, and preferably $2 \times 10^5$ to $9.5 \times 10^5$, may be used as an auxiliary raw material. By using the auxiliary raw material, the molding processability is improved, the blending ratio of the polyolefin resin and the plasticizer is easily selected, and the overlapping density of the molecular chains can be adjusted.

The most preferred form of the polyolefin resin is a polyolefin resin having a weight average molecular weight (Mw) of $1.0 \times 10^6$ or more, more preferably a polyolefin resin having an Mw of $1.4 \times 10^6$ or more, and still more preferably a polyolefin resin having an Mw of $2.0 \times 10^6$ or more. When the Mw of the polyolefin resin is $1.0 \times 10^6$ or more, the number of entanglements of molecular chains is increased, stress propagation in the stretching step becomes uniform, and the opening property is improved. As a result, fine and uniform pores are formed, and at least one of the number of pores per unit volume, the surface opening ratio, and the number of surface pores per unit area of the polyolefin microporous membrane increases, thereby obtaining good output characteristics. In addition, by using a polyolefin resin having an Mw of $1.0 \times 10^6$ or more, the number of tie molecules is increased, the strength of fibrils is increased, and the balance between the number of pores per unit volume or the number of surface pores per unit area and the strength can be improved. When the Mw is less than $1.0 \times 10^6$, stress is less likely to propagate in the stretching step, and the opening property may decrease.

Here, examples of the polyolefin resin include high density polyethylene having a density of more than 0.94 $g/cm^3$, medium density polyethylene having a density within the range of 0.93 to 0.94 $g/cm^3$, low density polyethylene having a density of less than 0.93 $g/cm^3$, and linear low-density polyethylene. From the viewpoint of pore uniformity and membrane strength, it is preferable to use ultrahigh molecular weight polyethylene having a weight average molecular weight of 1,000,000 or more alone.

In the production steps of the polyolefin microporous membrane of the present invention to be described later, it is preferable to add a plasticizer for the purpose of improving the molding processability.

The blending ratio of the polyolefin resin and the plasticizer may be appropriately selected within a range that does not impair the molding processability, and the proportion of the polyolefin resin is preferably 10 mass% to 50 mass% when the total of the polyolefin resin and the plasticizer is 100 mass%. When the proportion of the polyolefin resin is 10 mass% or more (the proportion of the plasticizer is 90 mass% or less), the swell and the neck-in can be prevented at an outlet of a die at the time of molding the polyolefin resin into a sheet shape, and the moldability of the sheet and the film-forming property are improved. On the other hand, when the proportion of the polyolefin resin is less than 50 mass% (the proportion of the plasticizer is more than 50 mass%), the pressure increase in the film forming step can be prevented, and good molding processability can be obtained.

The proportion of the polyolefin resin is preferably 12 mass% or more, more preferably 14 mass% or more, still more preferably 16 mass% or more, and yet still more preferably 20 mass% or more. When the proportion of the polyolefin resin is increased, the overlapping density of the molecular chains in the presence of the plasticizer is increased, and the uniformity of stretching is improved. As a result, a fine and uniform fibril structure is formed, it is possible to increase the strength with an increase in the number of fibrils and to increase the number of pores with an improvement in the uniformity of the opening. Thus, it is possible to achieve both safety and output characteristics which have been in a trade-off relationship in the related art. In addition, good molding processability can also be obtained. When the proportion of the polyolefin resin is increased, an increase in the stretching ratio and "pore collapse" in the washing and drying step are prevented, and a good porosity can be obtained.

Since the viscosity differs depending on the raw material used, the usage ratio also differs depending on the raw material used. However, in a case where a polyolefin resin having an Mw of 1,000,000 or more is used, the proportion of the polyolefin resin is preferably 40 mass% or less, more preferably 30 mass% or less, and still more preferably 25 mass% or less when the total of the polyolefin resin and the plasticizer is 100 mass%, from the viewpoint of pressure and stretching stress in the film forming step.

In addition, the polyolefin microporous membrane of the present invention may contain various additives such as an antioxidant, a heat stabilizer, an antistatic agent, an ultraviolet absorber, a blocking inhibitor, and a filler as long as the effects of the present invention are not impaired. In particular, an antioxidant is preferably added for the purpose of preventing oxidative degradation due to thermal history of the polyolefin resin.

As the antioxidant, for example, it is preferable to use one or more kinds selected from 2,6-di-t-butyl-p-cresol (BHT: molecular weight of 220.4), 1,3,5-trimethyl-2,4,6-tris(3,5-di-t-butyl-4-hydroxybenzyl) benzene (for example, "Irganox" (registered trademark) 1330: molecular weight of 775.2, manufactured by BASF), tetrakis [methylene-3 (3,5-di-t-butyl-4-hydroxyphenyl)propionate] methane (for example, "Irganox" (registered trademark) 1010: molecular weight of 1177.7, manufactured by BASF), and the like.

It is important to appropriately select the kind and the addition amount of the antioxidant and the heat stabilizer to adjust or enhance the characteristics of the polyolefin microporous membrane.

The layer configuration of the polyolefin microporous membrane of the present invention may be a single layer or a laminate, and from the viewpoint of physical property balance, the laminate is preferred. The raw material, the raw material ratio, and the raw material composition are not limited as long as they are within the above-described ranges. When the raw material formulation is laminated and used as a high-output characteristic layer, the high-output characteristic layer is preferably contained in an amount of 50 mass% or more in the total membrane thickness.

[2] Polyolefin microporous membrane

A disclosed but not claimed polyolefin microporous membrane is characterized in that the puncture strength Y (N) in terms of a membrane thickness of 10 $\mu$m and the number X of pores per unit volume ($/\mu m^3$) satisfy a relationship of formula (1), and the number of pores per unit volume is 40/$\mu m^3$ or more.

$$Y\,(N) \geq -6.7 \times 10^{-3} \times X\,(/\mu m^3) + 4.5 \qquad \text{Formula (1)}$$

The number X of pores per unit volume ($/\mu m^3$) can be calculated by the following formula (1a).

$$\text{Number X of pores } (/\mu m^3) = 4 \times (\varepsilon/100)/(\pi \times d^2 \times \tau_a/L) \qquad \text{Formula (1a)}$$

[$\varepsilon$: porosity (%), d: average pore diameter ($\mu m$), $\tau_a$: tortuosity calculated by formula (1b), L: membrane thickness ($\mu m$)]

$$\text{Tortuosity } \tau_a = \{d \times (\varepsilon/100) \times v/(3L \times P_s \times R_{gas})\}^{0.5} \qquad \text{Formula (1b)}$$

[d: average pore diameter ($\mu m$), $\varepsilon$: porosity (%), v: molecular velocity of air (= 500 m/sec), L: membrane thickness ($\mu m$), $P_s$: standard pressure (= 101,325 Pa), $R_{gas}$: gas permeation constant ($m^3/(m^2 \cdot sec \cdot Pa)$ calculated by formula (1c)]

$$R_{gas} = 0.0001/\{\text{air permeability } (sec/100\ cm^3) \times (6.424 \times 10^{-4}) \times (0.01276 \times P_s)\}$$

Formula (1c)

[Ps: standard pressure (= 101,325 Pa)]

In the disclosed polyolefin microporous membrane, a stress is applied to a resin layer uniformly and the resin layer is stretched, so that a fine and uniform fibril structure is formed, and the number of fibrils is increased to increase the strength. In addition, the uniformity of the pores is improved, and the number of pores per unit volume is increased to satisfy the relationship of the above formula (1). Therefore, the strength of the fibrils is increased to improve safety such as the foreign matter resistance, and the number of pores per unit volume is increased and micropores are formed uniformly to increase the number of the permeation paths of Li$^+$ ions, and as a result, the output characteristics and the safety of the polyolefin microporous membrane are improved.

The puncture strength affects the safety of the battery such as the foreign matter resistance, and the number of pores per unit volume affects the output characteristics of the battery. The puncture strength is an index indicating the strength of the film in the depth direction. When the number of pores per unit volume is increased, the number of voids is increased, and thus the puncture strength decreases. That is, the puncture strength and the number of pores per unit volume are in a trade-off relationship. Therefore, in order to achieve both the safety and the output characteristics, it is important to improve the balance between the number of pores per unit volume and the puncture strength. For the above reasons, the present inventors have focused on the puncture strength (N) in terms of a membrane thickness of 10 $\mu m$ and the number of pores per unit volume ($/\mu m^3$).

The present inventors have derived the relationship of the above formula (1) as follows.

First, Examples and Comparative Examples described later were plotted with the puncture strength (N) in terms of a membrane thickness of 10 $\mu m$ on the y-axis and the number of pores per unit volume ($/\mu m^3$) on the x-axis. Then, the present inventors have found that the existence ranges are clearly different in the plot of the polyolefin microporous membrane in which the puncture strength and the number of pores are increased and both the output characteristics and the safety are satisfied and the plot of the polyolefin microporous membrane in which the puncture strength and the number of pores are not increased.

The present inventors have found that a boundary line dividing the existence range is a straight line, and have found that establishing the relationship of the above formula (1) is one of the requirements for obtaining the effect when the straight line has been studied.

Examples of a method for establishing the relationship of the above formula (1) include a method of obtaining a fine and uniform crystal structure by performing rapid cooling in the step of forming a gel sheet described later, a method of improving the uniformity of stretching by increasing the overlapping density of molecular chains in the presence of a plasticizer, and a method of performing stretching at a high stretching ratio. By using these methods alone or in combination, it is possible to improve the output characteristics without increasing the porosity, and it is possible to achieve both the safety and the output characteristics that have been in a trade-off relationship in the related art.

The polyolefin microporous membrane according to the first embodiment of the present invention is characterized in that a relationship of the following formula (2) is satisfied: Y (N) $\geq$ -0.06 $\times$ Z ($/\mu m^2$) + 9.4 Formula (2), in which Z ($/\mu m^2$) represents the number of surface pores per unit area, and Y (N) represents the puncture strength in terms of a membrane thickness of 10 $\mu m$.

In a case where a microporous membrane is used as a separator of a lithium ion secondary battery, the movement of Li$^+$ ions is limited and a heterogeneous reaction occurs when the film resistance of the separator is high in the charge and discharge process. As a result, clogging of the pores occurs, and the output characteristics deteriorate. In order to reduce the membrane resistance, it is preferable to increase the number of pores on a surface of a separator (the number of surface pores per unit area).

The present inventors have derived the relationship of the above formula (2) as follows.

First, Examples and Comparative Examples described later were plotted with the puncture strength (N) in terms of a membrane thickness of 10 $\mu$m on the y-axis and the number of surface pores per unit area (/$\mu$m$^2$) on the x-axis. Then, the present inventors have found that the existence ranges are different in the plot of the polyolefin microporous membrane in which both the output characteristics and the safety are satisfied and the plot of the polyolefin microporous membrane in which both the output characteristics and the safety are not satisfied.

The present inventors have found that a boundary line dividing the existence range is a straight line, and have found that the relationship of the above formula (2) is one of the requirements for obtaining the effect of the present invention when the straight line has been studied.

Normally, the number of surface pores is correlated with the porosity, and the strength decreases as the number of surface pores increases. In contrast, in the polyolefin microporous membrane according to the second embodiment of the present invention, the number of entanglements of molecular chains is increased and the stress is uniformly applied to a resin layer to stretch the resin layer, and thus, stress propagation in the stretching step becomes uniform and the opening property is improved to form a uniform and fine pore structure. As a result, the number of surface pores measured by SEM observation is increased, and the number of fibrils per unit area is increased, so that it is possible to achieve both good ion permeability and strength. The present inventors have found that the relationship between the number of surface pores and the puncture strength, which have been in a trade-off relationship in the related art, is improved.

As a result, when the relationship of the above formula (2) is satisfied, it is possible to achieve both the safety and the output characteristics of the battery.

The number of surface pores of the microporous membrane can be measured by a scanning electron microscope (SEM) observation, and the number of surface pores of the microporous membrane is preferably 40/$\mu$m$^2$ or more, more preferably 60/$\mu$m$^2$ or more, still more preferably 80/$\mu$m$^2$ or more, most preferably 90/$\mu$m$^2$ or more, and remarkably preferably 100/$\mu$m$^2$ or more.

When the number of surface pores observed by the SEM is too large, the number of voids in the microporous membrane is increased, and the mechanical strength of the microporous membrane tends to decrease. Therefore, the number of surface pores is preferably 135/$\mu$m$^2$ or less, and more preferably 120/$\mu$m$^2$ or less.

The polyolefin microporous membrane according to the second embodiment of the present invention is characterized in that the relationship of the following formula (3) is satisfied: Y (N) >_ -0.11 × W (%) + 6.2 Formula (3), in which W (%) represents the surface opening ratio, and Y (N) represents the puncture strength in terms of a membrane thickness of 10 $\mu$m, and that the surface opening ratio W is 5% or more and 45% or less.

In a case where a microporous membrane is used as a separator of a lithium ion secondary battery, the movement of Li$^+$ ions is limited and a heterogeneous reaction occurs when the film resistance of the separator is high in the charge and discharge process. As a result, clogging of the pores occurs, and the output characteristics deteriorate. Therefore, in order to reduce the membrane resistance of the separator, it is preferable to increase the opening ratio (surface opening ratio) of the surface of the separator.

The present inventors have derived the relationship of the above formula (3) as follows.

First, Examples and Comparative Examples described later were plotted with the puncture strength (N) in terms of a membrane thickness of 10 $\mu$m on the y-axis and the surface opening ratio (%) on the x-axis. Then, the present inventors have found that the existence ranges are different in the plot of the polyolefin microporous membrane in which both the output characteristics and the safety are satisfied and the plot of the polyolefin microporous membrane in which both the output characteristics and the safety are not satisfied.

The present inventors have found that a boundary line dividing the existence range is a straight line, and have found that establishing the relationship of the above formula (3) is one of the requirements for obtaining the effect of the present invention when the straight line has been studied.

Normally, the surface opening ratio is correlated with the porosity. Since an increase in the surface opening ratio leads to a decrease in the amount of resin in the depth direction of the microporous membrane, the puncture strength decreases when the surface opening ratio is increased. The microporous membrane according to the second embodiment of the present invention has an improved pore opening property, and as a result, stress propagation in the stretching step becomes uniform, the strength of the formed fibrils increases, and high puncture strength can be obtained. Therefore, the relationship between the surface opening ratio and the puncture strength, which have been in a trade-off relationship, is improved, and when the relationship of the above formula (3) is satisfied, it is possible to achieve both excellent safety and output characteristics of the battery.

The surface opening ratio W of the microporous membrane is measured by the scanning electron microscope (SEM) observation according to a method described later, and the surface opening ratio is preferably 5% or more, more preferably 8% or more, still more preferably 10% or more, and yet still more preferably 12% or more. When the surface opening ratio is too high, dendrites are likely to be generated and the safety decreases. Therefore, the surface opening ratio is preferably 45% or less, more preferably 40% or less, still more preferably 38% or less, and yet still more preferably 35% or less.

In addition, in order to improve the output characteristics of the battery, it is necessary to increase the porosity of the polyolefin microporous membrane. However, when the porosity is increased, the amount of the resin in the polyolefin microporous membrane is reduced, and therefore, the strength of the membrane decreases and the safety of the battery decreases. Therefore, the output characteristics and the safety of the battery are in a trade-off relationship, and there is a problem in achieving both the output characteristics and the safety.

Examples of a method of increasing the porosity include a method of increasing the proportion of the plasticizer in kneading to sheet-forming step, and a method of increasing the stretching ratio in the dry re-stretching step. In a case where the proportion of the plasticizer is increased (the resin concentration decreases), a large amount of the plasticizer layer is present in the sheet, and the stretching stress is not applied to the polyolefin resin layer, and thus, the uniformity of the openings decreases.

As described above, the amount of the resin is reduced due to an increase in the porosity and the elasticity of the membrane decreases, and therefore, an increase in the stretching ratio and "pore collapse" in the washing and drying step occur. When the stretching ratio is increased in the dry re-stretching step, voids are likely to form in the polyolefin microporous membrane, and the uniformity of the film is less likely to be obtained.

When a polyolefin resin having an Mw of 1,000,000 or more is used, the viscosity is increased. Therefore, good film-forming properties can be obtained even at a relatively low resin concentration, and a good porosity can be obtained. A polyolefin resin having an Mw of 1,000,000 or more has a long molecular chain, so that the number of entanglements is increased, stress applied to the resin layer easily propagates in the stretching step, and the opening property is improved. Therefore, at least one of the number of pores per unit volume, the opening ratio of the surface, and the number of surface pores per unit area in the polyolefin microporous membrane is increased to increase the number of the ion permeation paths, as compared with the polyolefin microporous membrane according to the related art.

The present inventors have found that the strength of the polyolefin microporous membrane increases since the number of tie molecules increases with an increase in the molecular chain length, and have found that it is possible to achieve both output characteristics and safety that have been in a trade-off relationship.

The porosity of the polyolefin microporous membrane of the present invention is preferably 40% or more, more preferably 41% or more, and still more preferably 42% or more, from the viewpoint of permeability and the content of the electrolytic solution. When the porosity is 40% or more, the balance among the permeability, the strength, and the content of the electrolytic solution is improved, and the non-uniformity of the battery reaction is eliminated. As a result, generation of dendrites is prevented, and the polyolefin microporous membrane can be used without impairing battery performance in the related art and can be preferably used as a separator for a secondary battery.

In addition, good output characteristics can be obtained by increasing the porosity, but the puncture strength decreases. Therefore, the porosity is preferably less than 60%, more preferably 58% or less, and still more preferably 55% or less.

From the viewpoint of preventing rupture due to the electrode active material or the like, the puncture strength of the polyolefin microporous membrane in terms of a membrane thickness of 10 $\mu$m is 3.0 N or more, preferably 3.2 N or more, more preferably 3.5 N or more, still more preferably 3.8 N or more, and most preferably 4.0 N or more.

When the puncture strength is 3.0 N or more, a short circuit due to foreign matter or the like in the battery is prevented, and good safety of the battery can be obtained. From the viewpoint of improving the safety, higher puncture strength is preferred, and in order to increase the puncture strength, a method such as increasing the resin concentration or increasing the stretching ratio is adopted.

However, an increase in the resin concentration means a decrease in the porosity, resulting in a decrease in the output characteristics. When the stretching ratio is increased, the polyolefin microporous membrane is crushed in the membrane thickness direction, and thus "pore collapse" or voids (defects) are formed. Therefore, the uniformity of the battery reaction is decreased and the output characteristics are deteriorated.

In order to set the puncture strength to the above range, it is preferable that the raw material composition of the polyolefin microporous membrane is set to the above range, and the stretching conditions at the time of forming the polyolefin microporous membrane are set to the range described later.

The puncture strength in terms of a membrane thickness of 10 $\mu$m refers to the puncture strength L2 calculated by the formula: L2 = (L1 $\times$ 10)/T1, in which L1 is the puncture strength of the polyolefin microporous membrane having the membrane thickness T1 ($\mu$m). In the following description, unless otherwise specified in terms of the membrane thickness, the term "puncture strength" is used to mean "puncture strength in terms of a membrane thickness of 10 $\mu$m". When using the polyolefin microporous membrane of the present invention, the occurrence of pinholes and cracks can be prevented, and the yield in assembly of a battery can be improved.

In the charge and discharge process, the electrolytic solution is electrochemically decomposed inside the battery, and a solid product such as an organic substance or a gas such as ethylene or hydrogen gas is generated. These products block the pores in the polyolefin microporous membrane, and thus, the battery characteristics are deteriorated. Since the decomposition reaction easily proceeds when the ion permeation through permeation paths is uneven, the larger the number of the ion permeation paths is, the more preferable.

Therefore, the number of pores per unit volume determined in Examples described later is preferably $40/\mu m^3$ or more, more preferably $50/\mu m^3$ or more, still more preferably $60/\mu m^3$ or more, yet still more preferably $70/\mu m^3$ or more, even more preferably $80/\mu m^3$ or more, particularly preferably $100/\mu m^3$ or more, and most preferably $120/\mu m^3$ or more.

The number of pores per unit volume and the number of surface pores are correlated with the porosity, and the strength decreases with an increase in the number of pores per unit volume and the number of surface pores. However, in the polyolefin microporous membrane of the present invention, a polyolefin resin having a large molecular weight of, for example, $1.0 \times 10^6$ or more in Mw is used, and thus, the number of entanglements of molecular chains is increased, stress propagation in the stretching step becomes uniform, and the opening properties are improved. Further, the number of pores per unit volume and the number of surface pores are increased while maintaining the same porosity as that of a polyolefin microporous membrane according to the related art.

The polyolefin microporous membrane of the present invention has excellent puncture strength by using a polyolefin resin having a large molecular weight and increasing the number of tie molecules, and is excellent in that both output characteristics and safety, which have been in a trade-off relationship in the related art, are achieved.

As described above, from the viewpoint of the safety of the battery, the higher the puncture strength is, the more preferable. However, since the puncture strength depends on the amount of resin per unit volume, an increase in the puncture strength leads to a decrease in the porosity. Therefore, the puncture strength and the output characteristics are in a trade-off relationship. By satisfying the relationship of the above formula (1), it is possible to improve the safety and the output characteristics which have been in a trade-off relationship in the related art.

In the present invention, a direction parallel to a direction in which the polyolefin microporous membrane is formed is referred to as a membrane forming direction, a longitudinal direction, or an MD direction, and a direction perpendicular to the film forming direction in a plane of the polyolefin microporous membrane is referred to as a width direction or a TD direction.

In the battery, since tension is applied in the MD direction, the shrinkage rate determined by thermomechanical analysis (TMA) in the MD direction is preferably low. The thermal shrinkage rate in the MD direction at 120°C, which is measured by the TMA, is preferably 15% or less, more preferably 12% or less, still more preferably 10% or less, and yet still more preferably 8% or less.

The thermal shrinkage rate in the TD direction at 120°C, which is measured by the TMA, is preferably 15% or less, more preferably 12% or less, still more preferably 10% or less, and yet still more preferably 7% or less.

When the thermal shrinkage rate is within the above range, the expansion of the internal short circuit can be prevented, and the influence can be suppressed to the minimum even when abnormal heat is locally generated. The thermal shrinkage rate is in a trade-off relationship with the opening ratio, the number of pores per unit volume, the number of surface pores, and the puncture strength. However, in the polyolefin microporous membrane of the present invention, the stress propagation in the stretching step is uniform, so that the stress applied to the polyolefin resin is uniform. Therefore, strain is less likely to remain, a low thermal shrinkage rate is achieved, and excellent balance between the thermal shrinkage rate and the strength is achieved.

Both the tensile strengths at break in the MD direction and the TD direction (hereinafter, also simply referred to as "MD strength" and "TD strength") are preferably 180 MPa or more, more preferably 190 MPa or more, further preferably 200 MPa or more, further more preferably 210 MPa or more, still more preferably 250 MPa or more, yet still more preferably 260 MPa or more, and most preferably 270 MPa or more.

When the MD strength and the TD strength are less than 180 MPa, a short circuit due to a foreign substance or the like inside the battery is likely to occur, and the safety of the battery may decrease.

From the viewpoint of improving the safety, the tensile strength at break is preferably as high as possible, but the porosity or the opening ratio, the number of pores per unit volume or the number of surface pores, and the improvement of the tensile strength at break are often in a trade-off relationship, and thus both the MD strength and the TD strength are preferably 350 MPa or less, and more preferably 300 MPa or less. In order to set the MD strength and the TD strength to the above ranges, it is preferable that the raw material composition of the polyolefin microporous membrane is set to the above range, and the stretching conditions at the time of forming the polyolefin microporous membrane are set to the range described later.

The toughness, which is a measure of impact resistance determined based on the tensile strength at break and the tensile elongation at break, is calculated by the following calculation formula using the tensile strength at break and the tensile elongation at break in the MD direction and the TD direction, respectively.

Toughness (MPa×%) = MD tensile strength at break × MD tensile elongation at break + TD tensile strength at break × TD tensile elongation at break

The toughness, which is a measure of impact resistance, is preferably 20,000 (MPa×%) or more, more preferably 25,000 (MPa×%) or more, still more preferably 30,000 (MPa×%) or more, most preferably 35,000 (MPa×%) or more, particularly preferably 40,000 (MPa×%) or more from the viewpoint of the impact resistance. In terms of the upper limit, the toughness is preferably 500,000 (MPa×%) or less, more preferably 400,000 (MPa×%) or less, still more preferably 300,000 (MPa×%) or less, and most preferably 200,000 (MPa×%) or less, because other physical properties, for example, ion permeability deteriorates.

The average pore diameter measured by a porometer is preferably 10 nm or more from the viewpoint of ion permeability. When the average pore diameter is 10 nm or more, an opening ratio, the number of pores per unit volume, and the number of surface pores are good, and excellent battery characteristics can be obtained. Since the preferred porosity is determined from the viewpoint of the battery characteristics, fine and uniform pores are effective in increasing the ion permeation paths.

The number of the ion permeation paths decreases when the average pore diameter is increased. Therefore, the average pore diameter is preferably less than 40 nm, more preferably less than 35 nm, still more preferably less than 30 nm, yet still more preferably less than 28 nm, and most preferably less than 25 nm.

The surface pore diameter determined based on the SEM image captured by a method described in Examples is preferably 20 nm or more and 70 nm or less, more preferably 20 nm or more and 60 nm or less, and still more preferably 20 nm or more and 50 nm or less, from the viewpoint of the puncture strength and the ion permeability. When the surface pore diameter is within the above range, the number of pores per unit volume and the number of surface pores easily fall within the above range, and good safety and output characteristics can be obtained.

In the polyolefin microporous membrane of the present invention, the air permeability refers to a value measured in accordance with JIS P8117 (2009). In the present specification, the term "air permeability" is used to mean "air permeability in terms of a membrane thickness of 10 $\mu$m" unless otherwise stated about membrane thickness. When the air permeability measured for a polyolefin microporous membrane having a membrane thickness of T1 ($\mu$m) is P1, the air permeability P2 calculated by the formula of P2 = (P1 × 10)/T1 is an air permeability in terms of a membrane thickness of 10 $\mu$m.

The air permeability (Gurley value) is preferably 1,000 sec/100 cm$^3$ or less, more preferably 700 sec/100 cm$^3$ or less, still more preferably 500 sec/100 cm$^3$ or less, and yet still more preferably 350 sec/100 cm$^3$ or less. When the air permeability is 1,000 sec/100 cm$^3$ or less, good ion permeability can be obtained, and the electrical resistance can be reduced.

[3] Method of Producing Polyolefin microporous membrane

Next, a method of producing the polyolefin microporous membrane of the present invention will be specifically described. The production method of the present invention preferably includes the following steps (a) to (e).

(a) A step of preparing a polyolefin resin solution by melt-kneading polymer materials containing one or more polyolefin resins and, if necessary, a solvent;
(b) A step of extruding the dissolved material, molding the material into a sheet shape, and performing cooling and solidifying;
(c) A step of stretching the obtained sheet by a roll method or a tenter method;
(d) A step of extracting a plasticizer from the obtained stretched film and drying the film after the step (c); and
(e) A step of performing heat treatment/re-stretching.

Hereinafter, the steps will be described.

(a) Step of Preparing Polyolefin Resin Solution

The polymer material is heated and dissolved in a plasticizer to prepare a polyolefin resin solution.

The plasticizer is not particularly limited as long as it is a solvent capable of sufficiently dissolving the polyolefin resin, but the solvent is preferably liquid at room temperature to enable relatively high-magnification stretching.

The content of the ultrahigh molecular weight polyethylene having a weight average molecular weight of 1,000,000 or more in the solution is, for example, 5 to 30 mass%, preferably 9 to 30 mass%, more preferably 16 to 30 mass% by mass, still more preferably 17 to 30 mass%, and particularly preferably 19 to 30 mass%, when the total of the solvent and the polyolefin resin is 100 mass%. The content of the polyolefin resin in the solution is, for example, less than 30 mass%, preferably 10 to 29 mass%, more preferably 15 to 29 mass%, and still more preferably 17 to 29 mass%, when the total of the solvent and the polyolefin resin is 100 mass%.

Examples of the solvent include aliphatic, cyclic aliphatic or aromatic hydrocarbons such as nonane, decane, decalin, paraxylene, undecane, dodecane and liquid paraffin, mineral oil fractions having boiling points corresponding to these hydrocarbons, and phthalates, which are liquid at room temperature, such as dibutyl phthalate and dioctyl phthalate.

In order to obtain a gel sheet having a liquid solvent in a stable content, it is preferable to use a nonvolatile liquid solvent such as liquid paraffin.

In the melt-kneaded state, a solvent which can be mixed with the polyolefin resin and is solid at room temperature may be mixed with the liquid solvent. Examples of such a solid solvent include stearyl alcohol, ceryl alcohol, and paraffin wax. However, when only the solid solvent is used, stretching unevenness or the like may occur.

The viscosity of the liquid solvent is preferably 20 cSt (20 mPa.s) to 200 cSt (200 mPa.s) at 40°C. When the viscosity at 40°C is 20 cSt (20 mPa.s) or more, the sheet obtained by extruding the polyolefin resin solution from a die is less likely to become non-uniform. On the other hand, when the viscosity at 40°C is 200 cSt (200 mPa.s) or less, the liquid solvent can be easily removed. The viscosity of the liquid solvent is a viscosity measured at 40°C using an ubbelohde viscometer.

(b) Formation of Extruded Product and Formation of Gel Sheet

A method of uniformly melt-kneading the polyolefin resin solution is not particularly limited, but when a high concentration polyolefin resin solution is desired to be prepared, a method of extruding the solution from a die (for example, using a twin-screw extruder) is preferred. If necessary, various additives such as an antioxidant may be added as long as the effects of the present invention are not impaired. In particular, an antioxidant is preferably added in order to prevent oxidation of the polyolefin resin.

In the extruder, the polyolefin resin solutions are uniformly mixed at a temperature at which the polyolefin resin is completely melted. The melt-kneading temperature depends on the polyolefin resin to be used, and is preferably (melting point of the polyolefin resin + 10°C) to (melting point of the polyolefin resin + 120°C). The melt-kneading temperature is more preferably (melting point of polyolefin resin + 20°C) to (melting point of polyolefin resin + 100°C).

Here, the melting point refers to a value measured by Differential Scanning Calorimetry (DSC) based on JIS K7121 (1987) (the same applies hereinafter). For example, the melt-kneading temperature in the case of polyethylene is preferably within the range of 140°C to 250°C, more preferably 160°C to 230°C, and most preferably 170°C to 200°C. Specifically, the polyethylene composition has a melting point of about 130°C to 140°C, so that the melt-kneading temperature is preferably 140°C to 250°C, and most preferably 180°C to 230°C.

From the viewpoint of preventing deterioration of the polyolefin resin, it is preferable that the melt-kneading temperature is low, but when the melt-kneading temperature is lower than the above-described temperature, an unmelted product is generated in an extruded product extruded from a die, which may cause rupture or the like in a subsequent stretching step. When the melt-kneading temperature is higher than the above-described temperature, the thermal decomposition of the polyolefin resin becomes severe, and the physical properties, for example, strength, porosity, or the like of the polyolefin microporous membrane to be obtained may deteriorate. The decomposition product precipitates on a chill roll, a roll in the stretching step, or the like and adheres to the sheet, which leads to deterioration of the appearance. Therefore, the melt-kneading temperature is preferably within the above range.

Next, a gel sheet is obtained by cooling the obtained extruded product, and the micro phase of the polyolefin resin separated by the solvent can be fixed by cooling. In the cooling step, the temperature of the gel sheet is preferably lowered to 10°C to 50°C. This is because the final cooling temperature is preferably equal to or lower than the crystallization end temperature, and uniform stretching can be easily performed in the subsequent stretching by making a high-order structure finer. Therefore, cooling is preferably performed at a rate of 30°C/min or more at least until the temperature is equal to or lower than the gelation temperature.

In general, when the cooling rate is low, relatively large crystals are formed, and thus, the high-order structure of the gel sheet becomes coarse, and a gel structure forming the high-order structure also becomes large. In contrast, when the cooling rate is high, relatively small crystals are formed, and thus, the high-order structure of the gel sheet becomes dense, which leads to a high toughness of the film in addition to uniform stretching.

Examples of the cooling method include a method of bringing the obtained extruded product into direct contact with cold air, cooling water, or another cooling medium, a method of bringing the obtained extruded product into contact with a roll cooled with a refrigerant, and a method of using a casting drum or the like.

Although the case where the polyolefin microporous membrane is a single layer has been described so far, the polyolefin microporous membrane of the present invention is not limited to a single layer, and may be a laminate. The number of laminated layers is not particularly limited, and may be two or three or more. As described above, in addition to the polyolefin resin, each of the laminated portions may contain a desired resin to the extent that the effect of the present invention is not impaired.

As a method of forming the polyolefin microporous membrane into a laminate, a method according to the related art can be used. For example, there is a method in which desired resins are prepared as necessary, these resins are separately supplied to an extruder, melted at a desired temperature, merged in a polymer tube or a die, and extruded from a slit-shaped die at a desired lamination thickness to form a laminate.

(c) Stretching Step

The obtained gel sheet (including the laminated sheet) is stretched to obtain a stretched film.

Examples of the stretching method to be used include MD uniaxial stretching performed by a roll stretching machine, TD uniaxial stretching performed by a tenter, sequential biaxial stretching performed by a combination of a roll stretching machine and a tenter or a combination of a tenter and a tenter, and simultaneous biaxial stretching performed by a simultaneous biaxial tenter.

The stretching ratio varies depending on the thickness of the gel sheet from the viewpoint of the uniformity of the membrane thickness, but it is preferable to stretch the gel sheet 7 times or more in any direction.

The area magnification is 40 times or more, preferably 49 times or more, more preferably 60 times or more, still more preferably 80 times or more, and particularly preferably 100 times or more. When the area magnification is less than 40 times, the film is insufficiently stretched and the uniformity of the film is likely to be impaired, and the good number of pores per unit volume or the good number of surface pores cannot be obtained. The area magnification is preferably 150 times or less. When the area ratio is increased, breakage is likely to occur during the production of the polyolefin microporous membrane, and the productivity decreases.

From the viewpoint of improving the stretching uniformity in the stretching step, a preferred mode of the stretching ratio and the raw material composition is to wetly stretch a raw material having an Mw of 1,000,000 or more to $8 \times 8$ times or more, and more preferably to wetly stretch the raw material to $10 \times 10$ times or more. More preferably, a raw material having an Mw of 2,000,000 or more is wet-stretched to $8 \times 8$ times or more, and most preferably, wet-stretched to $10 \times 10$ times or more.

The stretching temperature is within a range of (crystal dispersion temperature Tcd of gel sheet) to (melting point of gel sheet + 10°C), and preferably within a range of (crystal dispersion temperature Tcd of gel sheet) to (melting point of gel sheet + 5°C). Specifically, in the case of a polyethylene composition, the gel sheet has a crystal dispersion temperature of about 90°C to 110°C, so that the stretching temperature is preferably 90°C to 130°C, and more preferably 90°C to 120°C.

The crystal dispersion temperature Tcd is determined based on the temperature characteristics of dynamic viscoelasticity measured according to ASTM D 4065 (2012).

When the stretching temperature is lower than 90°C, the pore opening is insufficient due to the low-temperature stretching, and thus, the uniformity of the membrane thickness is less likely to be obtained, and the porosity also decreases. When the stretching temperature is higher than 130°C, melting of the sheet occurs, and clogging of pores is likely to occur.

By the stretching as described above, cleavage occurs in the high-order structure formed in the gel sheet, the crystal phase is miniaturized, and a large number of fibrils are formed. Fibrils form a three-dimensionally irregularly connected network structure. The mechanical strength is improved and fine pores are formed by stretching, so that the polyolefin microporous membrane of the present invention is suitable for a battery separator.

In addition, the polyolefin resin is sufficiently plasticized and softened by performing stretching before removing the plasticizer, so that the cleavage of the high-order structure becomes smooth, and the crystal phase can be uniformly miniaturized. The cleavage is facilitated by performing the stretching before removing the plasticizer, so that strain during stretching is less likely to remain, and the thermal shrinkage rate can be reduced as compared with the case where stretching is performed after removing the plasticizer.

(d) Plasticizer Extraction (Washing) and Drying Step

Next, the plasticizer (solvent) remaining in the stretched film is removed using a washing solvent. Since the polyolefin resin phase and the solvent phase are separated from each other, a polyolefin microporous membrane is obtained by removing the plasticizer (solvent).

Examples of the washing solvent include saturated hydrocarbons such as pentane, hexane, and heptane, chlorinated hydrocarbons such as methylene chloride and carbon tetrachloride, ethers such as diethyl ether and dioxane, ketones such as methyl ethyl ketone, and chain fluorocarbons such as ethane trifluoride.

These washing solvents have a low surface tension (for example, 24 mN/m or less at 25°C). By using a washing solvent having a low surface tension, shrinkage of the network structure forming the micropores is prevented by the surface tension of the air-liquid interface during drying after washing, and a polyolefin microporous membrane excellent in porosity and permeability can be obtained. These washing solvents are appropriately selected according to the plasticizer, and used alone or as a mixture.

Examples of the washing method include a method of immersing a stretched film in a washing solvent and extracting the film, a method of showering a stretched film with a washing solvent, and a method based on a combination thereof. The amount of the washing solvent used varies depending on the washing method, and is generally preferably 300 parts by mass or more with respect to 100 parts by mass of the stretched film.

The washing temperature may be 15°C to 30°C, and if necessary, the washing solvent is heated to reach 80°C or lower. In this case, the time during which the stretched film is immersed in the washing solvent is preferably as long as possible from the viewpoint of enhancing the washing effect of the washing solvent, from the viewpoint of preventing the physical properties (for example, the physical properties in the TD direction and/or the MD direction) of the obtained polyolefin microporous membrane from becoming non-uniform, and from the viewpoint of improving the mechanical properties and the electrical properties of the polyolefin microporous membrane.

The washing as described above is preferably performed until the residual solvent in the stretched film after washing, that is, the polyolefin microporous membrane becomes less than 1 mass%.

Thereafter, the solvent in the stretched film is dried and removed in a drying step. The drying method is not particularly limited, and a method using a metal heating roll, a method using hot air, or the like can be selected. The drying temperature is preferably 40°C to 100°C, and more preferably 40°C to 80°C. When the drying is insufficient, the porosity of the polyolefin microporous membrane decreases in the subsequent heat treatment, and the permeability deteriorates.

(e) Heat Treatment/Re-stretching Step

The dried stretched film is subjected to at least one of heat treatment and re-stretching (stretching at least in one direction).

The heat treatment is, for example, a heat treatment in the MD direction performed by a roll, or a heat treatment in the TD direction performed by a tenter, and can be performed by using a combination of a roll and a tenter, or a combination of a tenter and a tenter.

The temperature of the heat treatment is preferably 120°C to 140°C, and more preferably 125°C to 135°C.

The re-stretching can be performed by a tenter method or the like in the same manner as the stretching described above while heating the stretched film. The re-stretching may be uniaxial stretching or biaxial stretching. In the case of multistage stretching, the re-stretching is performed by combining simultaneous biaxial stretching or sequential stretching.

The temperature of the re-stretching is preferably equal to or lower than the melting point of the stretched film, and more preferably within the range of (Tcd of stretched film - 20°C) to the melting point of the stretched film. Specifically, in the case of the polyethylene composition, the re-stretching temperature is preferably 70°C to 135°C, and more preferably 110°C to 132°C. The temperature of the re-stretching is most preferably 120°C to 130°C.

In the case of uniaxial stretching, the re-stretching ratio is preferably 1.01 to 2.0 times, and in particular, the ratio in the TD direction is preferably 1.1 to 1.6 times, and more preferably 1.2 to 1.4 times. In the case of performing biaxial stretching, it is preferable to perform stretching at a ratio of 1.01 to 2.0 times in each of the MD direction and the TD direction. The ratio of the re-stretching may be different between the MD direction and the TD direction. When the stretched film is re-stretched within the above range, the porosity and the permeability are increased, and the number of unopened portions of the polyolefin microporous membrane is reduced, thereby increasing the number of pores per unit volume and the number of surface pores.

From the viewpoint of the thermal shrinkage rate and wrinkles and slack, the relaxation rate from the maximum re-stretching ratio is preferably 20% or less, more preferably 10% or less, and still more preferably 5% or less. When the relaxation rate is 20% or less, a uniform fibril structure can be obtained.

(f) Other Steps

Further, the polyolefin microporous membrane may be subjected to a hydrophilization treatment depending on applications. The hydrophilization treatment can be performed by a monomer graft, a surfactant treatment, corona discharge, or the like. The monomer graft is preferably performed after the crosslinking treatment.

The polyolefin microporous membrane is preferably subjected to a crosslinking treatment by irradiation with ionizing radiation such as $\alpha$-rays, $\beta$-rays, $\gamma$-rays, and an electron beam. In the case of the irradiation with the electron beam, the electron dose is preferably 0.1 to 100 Mrad, and the acceleration voltage is preferably 100 kV to 300 kV The crosslinking treatment increases the meltdown temperature of the polyolefin microporous membrane.

In the case of the surfactant treatment, any of a nonionic surfactant, a cationic surfactant, an anionic surfactant, and an amphoteric surfactant can be used, and a nonionic surfactant is preferred. The polyolefin microporous membrane is immersed in a solution obtained by dissolving a surfactant in water or a lower alcohol such as methanol, ethanol and isopropyl alcohol, or the polyolefin microporous membrane is coated with the solution by a doctor blade method.

For the polyolefin microporous membrane of the present invention, surface coatings of a fluorine-based resin porous body such as polyvinylidene fluoride and polytetrafluoroethylene, a porous body such as polyimide and polyphenylene sulfide or so on, or inorganic coatings of ceramics or so on may be performed, for the purpose of improving meltdown characteristics and heat resistance when used as a battery separator.

The polyolefin microporous membrane obtained as described above can be used in various applications such as a filter, a separator for a fuel cell, and a separator for a capacitor, and is excellent in the safety and the output characteristics particularly when used as a battery separator. Therefore, the separator can be preferably used as a battery separator for a secondary battery, which requires high energy density, high capacity, and high output, of an electric vehicle or the like.

[Examples]

The present invention will be described in more detail by way of Examples, but the embodiments of the present invention are not limited to these Examples.

The evaluation method and the analysis method used in the Examples are as follows.

(1) Weight Average Molecular Weight (Mw)

The weight average molecular weights of the ultrahigh molecular weight polyethylene and the high-density polyethylene were determined by gel permeation chromatography (GPC) under the following conditions.

Measurement device: GPC-150C manufactured by WATERS CORPORATION
Column: SHODEX UT806M manufactured by Showa Denko K. K.
Column temperature: 135°C
Solvent (mobile phase): O-dichlorobenzene
Solvent flow rate: 1.0 mL/min
Sample concentration: 0.1 wt% (dissolution condition: 135°C/1 H)
Injection amount: 500 μL
Detector: differential refractometer (RI detector) manufactured by WATERS CORPORATION
Calibration curve: created from a calibration curve obtained using a monodisperse polystyrene standard sample using a predetermined conversion constant.

(2) Membrane thickness

The membrane thicknesses of 5 points were measured at locations randomly extracted within a range of 95 mm × 95 mm of the polyolefin microporous membrane by a contact thickness meter (Light MATIC manufactured by Mitutoyo Corporation), and an average value of the membrane thicknesses at the 5 points was determined.

(3) Air permeability (sec/100 cm$^3$)

An air permeability P1, which is time required for allowing 100 cm$^3$ of a gas to pass through the polyolefin microporous membrane having a membrane thickness of T1, was measured with an air permeability meter (EGO-1T, manufactured by Asahi Seiko Co., Ltd.), and the air permeability P2 in terms of a membrane thickness of 10 μm was calculated by the formula: P2 = (P1 × 10)/T1.

Air was used as the above-described gas.

(4) Porosity

A 5 cm square sample was cut from a polyolefin microporous membrane, and the volume (cm$^3$) and the mass (g) of the sample were determined. The porosity was calculated based on the volume (cm$^3$) and the mass (g) of the sample and the polymer density (g/cm$^3$) using the following formula. The above measurement was carried out at three points at different randomly extracted points in the same polyolefin microporous membrane, and an average value of the porosity at the three points was determined.

$$\text{Porosity} = [(\text{volume} - \text{mass/polymer density})/\text{volume}] \times 100$$

(5) Puncture Strength in Terms of Membrane thickness of 10 μm

A puncture meter manufactured by MARUBISHI is used to measure the maximum load when a polyolefin microporous membrane having a membrane thickness T1 (μm) is punctured by a needle having a diameter of 1 mm whose distal end is spherical (curvature radius R: 0.5 mm) at a rate of 2 mm/sec, and the maximum load was defined as the puncture strength.

The measured value L1 (N) of the maximum load was converted, by the formula: L2 = L1/T1 × 10, into the maximum load L2 when the membrane thickness was set to 10 μm, and the maximum load L2 was defined as the puncture strength in terms of the membrane thickness of 10 μm. The above measurement was carried out at three points at different randomly extracted points in the same polyolefin microporous membrane, and an average value of the puncture strength at the three points and an average value of the puncture strength in terms of the membrane thickness of 10 μm were determined.

(6) Tensile Strength at Break (MPa) And Tensile Elongation at Break (%)

Three strip-shaped test pieces having a width of 10 mm were taken from a center portion in the width direction of the polyolefin microporous membrane, and the tensile strength at break and the tensile elongation at break in each of the MD direction and the TD direction were determined by calculating an average value of the measurement results measured according to ASTM D882 (2012) for each of the test pieces.

(7) Toughness (MPa×%)

The toughness was determined according to the following formula using the tensile strength at break and the tensile elongation at break, which were determined based on (6).

Toughness (MPa×%) = MD tensile strength at break × MD tensile elongation at break + TD tensile strength at break × TD tensile elongation at break

(8) Thermal Shrinkage Rate (%) at 120°C in TMA

Using a thermomechanical analyzer (TMA/SS6600, manufactured by Seiko Instruments Inc.), a test piece having a length of 10 mm (MD direction) and a width of 3 mm (TD direction) was heated from room temperature at a rate of 5°C/min while being pulled in the MD direction under a constant load (2 gf), the sample length at 120°C was measured, and the shrinkage rate of the test piece was defined as the MD shrinkage rate at 120°C in TMA. In addition, a test piece having a length of 10 mm (TD direction) and a width of 3 mm (MD direction) was measured for the shrinkage rate in the same manner while being pulled in the TD direction under a constant load (2 gf), and the measured shrinkage rate was defined as the TD shrinkage rate at 120°C in TMA.

(9) Maximum Pore Diameter (BP Diameter) and Average Pore Diameter

Using a Perm Porometer (CFP-1500A, manufactured by PMI), the maximum pore diameter and the average pore diameter were measured in the order of Dry up and Wet up. In the Wet-up measurement, Galwick (trade name) manufactured by PMI having a surface tension of 15.6 dynes/cm was used. A pressure was applied to a polyolefin microporous membrane sufficiently immersed in Galwick, and the pore diameter converted from the pressure at which air began to penetrate the polyolefin microporous membrane was defined as the maximum pore diameter.

The average pore diameter was converted from the pressure at a point of intersection between a curve with 1/2 the slope of a curve of pressure and flow rate in the Dry-up measurement and the curve in the Wet-up measurement. For the conversion of the pressure and the average pore diameter, the following formula was used.

$$d = C \cdot \gamma / P$$

(In the above formula, "d (μm)" represents an average pore diameter of a polyolefin microporous membrane, "γ (mN/m)" represents the surface tension of a liquid, "P (Pa)" represents the pressure, and "C" represents a constant.)

(10) Calculation of Surface Opening Ratio, The Number of Surface Pores, and Surface Pore Diameter

A deposited polyolefin microporous membrane was observed using a scanning electron microscope (SEM) at an acceleration voltage of 2 kV The captured SEM image was subjected to binarization processing to extract pores, and the number of surface pores per unit area, the surface opening ratio, and the surface pore diameter were calculated.

The binarization processing was performed by using an image of 11.7 μm × 9.4 μm (1280 pixels × 1024 pixels) and an 8-bit (256 gradations) gray scale at an acceleration voltage of 2 kV and a magnification of 10,000 times. As an image processing method, after removing noise on the above SEM image by averaging 3 pixels × 3 pixels, a dynamic binarization processing was performed from an image averaged by 21 pixels × 21 pixels with -30 grade as a threshold value to extract a dark part, thereby performing the binarization processing.

Aproportion of an area occupied by all dark portions in the entire original SEM image was defined as the surface opening ratio (SEM) (%). In addition, the number of surface pores present per 1 $\mu m^2$ from the extracted independent dark portion was calculated and defined as the number of surface pores (SEM) ($/\mu m^2$).

An average value was calculated from each area of the independent pores based on the following formula, and the average value was defined as the surface pore diameter (SEM) (nm).

Surface pore diameter (SEM) = (total area of pores/the number of surface pores/3.14)$^{0.5}$ × 2

In addition, the value of "-0.06 × the number of surface pores Z ($/\mu m^2$) + 9.4", which was the right side of the formula (2), and the value of "-0.11 × surface opening ratio W (%) + 6.2", which was the right side of the formula (3), were determined.

(11) Number of Pores Per Unit Volume

The number of pores per unit volume was determined according to the above formula (1a).

The tortuosity $\tau_a$ was obtained according to the above formula (1b).

The value of "-6.7 × 10$^{-3}$ × the number of pores ($/\mu m^3$) + 4.5", which is the right side of the formula (1), was determined.

(12) Evaluation of Foreign Matter Resistance

Using a tensile tester (AUTOGRAPH) (AGS-X manufactured by SHIMAZU), a 1.5-V capacitor, and a data logger, a simple battery in which a negative electrode, a polyolefin microporous membrane, chromium balls having a diameter of 500 $\mu$m, and an aluminum foil were set in this order was pressed under a condition of 0.3 mm/min, and a displacement amount until a short circuit of the battery occurred was measured. A sample in which a short circuit did not occur even at a high displacement amount had better foreign matter resistance, and the relationship between the displacement amount and the foreign matter resistance was evaluated in the following five grades.

A: The displacement amount (mm)/separator thickness ($\mu$m) was 0.030 or more.
B: The displacement amount (mm)/separator thickness ($\mu$m) was 0.025 or more and less than 0.030.
C: The displacement amount (mm)/separator thickness ($\mu$m) was 0.020 or more and less than 0.025.
D: The displacement amount (mm)/separator thickness ($\mu$m) was 0.015 or more and less than 0.020.
E: The displacement amount (mm)/separator thickness ($\mu$m) was less than 0.015.

(13) Measurement of Capacity Retention Rate at 17C

In order to evaluate the rate characteristics of the polyolefin microporous membrane, the polyolefin microporous membrane was incorporated as a separator into a nonaqueous electrolyte secondary battery including a positive electrode, a negative electrode, a separator, and an electrolyte, and a charge and discharge test was performed.

A cathode obtained by laminating an NMC 532 (lithium nickel manganese cobalt composite oxide ($Li_{1.05}Ni_{0.50}Mn_{0.29}Co_{0.21}O_2$)) on an aluminum foil having a width of 38 mm, a length of 33 mm, and a thickness of 20 $\mu$m at a basis weight of 9.5 mg/cm$^2$, and an anode obtained by laminating natural graphite having a density of 1.45 g/cm$^3$ on a copper foil having a width of 40 mm, a length of 35 mm, and a thickness of 10 $\mu$m at a unit area mass of 5.5 mg/cm$^2$ were used. The positive electrode and the negative electrode were dried in a vacuum oven at 120°C and used.

A polyolefin microporous membrane having a length of 50 mm and a width of 50 mm was dried in a vacuum oven at room temperature and used as the separator. As the electrolytic solution, vinylene carbonate (VC) and LiPF$_6$ were dissolved in a mixture (volume ratio: 30/35/35) of ethylene carbonate, ethyl methyl carbonate, and dimethyl carbonate to prepare a solution having a VC concentration of 0.5 mass% and a LiPF$_6$ concentration of 1 mol/L.

The positive electrode, the separator, and the negative electrode were stacked, the obtained laminate was disposed in a laminate pouch, an electrolytic solution was poured into the laminate pouch, and the laminate pouch was vacuum-sealed, thereby producing a nonaqueous electrolyte secondary battery.

The prepared nonaqueous electrolyte secondary battery was initially charged at a temperature of 35°C and 0.1C by 10% to 15%, and left at 35°C overnight (12 hours or longer) to perform degassing. Next, CC-CV charging (termination current condition: 0.02C) with a charging current value of 0.1C, which was performed at a temperature of 35°C and a voltage range of 2.75 to 4.2 V, and CC discharging with a discharging current value of 0.1C were performed. Next, a point of time at which three cycles of CC-CV charging (termination current condition: 0.05C) with a charging current value of 0.2C, which was performed at a temperature of 35°C and a voltage range of 2.75 to 4.2 V, and CC discharging with a discharging current value of 0.2C were performed was defined as an initial stage of the nonaqueous electrolyte secondary battery.

Next, CC-CV charging (termination current condition: 0.05C) with a charging current value of 0.2C, which was performed at a temperature of 35°C and a voltage range of 2.75 to 4.2 V, and CC discharging with a discharging current value of 0.2C were performed, and the discharging capacity at that time was defined as 0.2C capacity. Next, CC-CV charging (termination current condition: 0.05C) was performed at a temperature of 35°C, a voltage range of 2.75 to 4.2 V, and a charging current value of 0.5C, and then a rate test at 17C (306 mA, 24.48 mA/cm$^2$) of the nonaqueous electrolyte secondary battery was performed at 35°C. From this result, a ratio of 17C capacity to 0.2C capacity {(17C capacity/0.2C capacity) $\times$ 100} (%) was defined as the capacity retention rate (%).

[Example 1]

Ultrahigh molecular weight polyethylene having an Mw of $20 \times 10^5$ was used as a raw material. To 10 parts by mass of the ultrahigh molecular weight polyethylene, 90 parts by mass of liquid paraffin were added, and further, based on the mass of the ultrahigh molecular weight polyethylene, 0.5 parts by mass of 2,6-di-t-butyl-p-cresol and 0.7 parts by mass of tetrakis[methylene-3-(3,5-di-t-butyl-4-hydroxyphenyl)-propionate] methane were added as an antioxidant and mixed with the mixture to prepare a polyethylene resin solution.

The obtained polyethylene resin solution was put into a twin-screw extruder, kneaded at 180°C, supplied to a T-die, and the extruded product was cooled by a cooling roll controlled to 15°C to form a gel sheet.

The obtained gel sheet was biaxially stretched simultaneously at 115°C in both the longitudinal direction and the width direction by 8 times using a tenter stretching machine, the sheet width was fixed in the tenter stretching machine, and the sheet was held at a temperature of 115°C for 10 seconds.

Next, the stretched gel sheet was immersed into a methylene chloride bath in a washing tank, liquid paraffin was removed, and then drying was performed, thereby obtaining a polyolefin microporous membrane. Finally, an oven including a plurality of zones divided in the longitudinal direction was used as an oven of the tenter stretching machine, and thermal fixing was performed at a temperature of 120°C for 10 minutes without performing stretching.

The raw material formulation and the membrane forming conditions of the polyolefin microporous membrane are shown in Table 1, and the evaluation results of the polyolefin microporous membrane are shown in Table 3.

[Examples 2 to 11 and Comparative Examples 1 to 4 and 7 to 11]

Polyolefin microporous membranes were produced in the same manner as in Example 1 except that the raw material formulation and the film forming conditions were changed as shown in Tables 1 and 2.

In Tables 1 and 2, "UHPE" means ultrahigh molecular weight polyethylene, and "HDPE" means high density polyethylene.

The evaluation results of the obtained polyolefin microporous membranes are as shown in Tables 3 and 4. Blanks in Tables 3 and 4 mean that measurement has not been performed.

Table 1

| | | | Examples | | | | | |
|---|---|---|---|---|---|---|---|---|
| | | | 1 | 2 | 3 | 4 | 5 | 6 |
| UHPE | Mw | $\times 10^5$ | 20 | 20 | 20 | 20 | 20 | 20 |
| | Content | parts by mass | 100 | 100 | 100 | 100 | 100 | 100 |
| HDPE | Mw | $\times 10^5$ | - | - | - | - | - | - |
| | Content | parts by mass | - | - | - | - | - | - |
| Resin concentration | | mass% | 10 | 10 | 10 | 10 | 16 | 16 |
| Stretching method | | | Simultaneous biaxial | Simultaneous biaxial | Sequential biaxial | Sequential biaxial | Simultaneous biaxial | Sequential biaxial |

(continued)

| | | | Examples | | | | | |
|---|---|---|---|---|---|---|---|---|
| | | | 1 | 2 | 3 | 4 | 5 | 6 |
| Stretching ratio (MD × TD) | times | | 8 × 8 | 10 × 10 | 8 × 8 | 10 × 10 | 8 × 8 | 8 × 8 |
| Stretching temperature | °C | | 115 | 115 | 115 | 115 | 115 | 115 |
| Thermal fixing temperature | °C | | 120 | 120 | 120 | 120 | 120 | 120 |
| Thermal fixing time | min | | 10 | 10 | 10 | 10 | 10 | 10 |

(Table 1 continued)

| | | | Examples | | | | |
|---|---|---|---|---|---|---|---|
| | | | 7 | 8 | 9 | 10 | 11 |
| UHPE | Mw | × 10$^5$ | 10 | 10 | 20 | 20 | 20 |
| | Content | parts by mass | 100 | 100 | 30 | 30 | 50 |
| HDPE | Mw | × 10$^5$ | - | - | 3 | 3 | 3 |
| | Content | parts by mass | - | - | 70 | 70 | 50 |
| Resin concentration | mass% | | 17 | 17 | 28.5 | 17 | 14 |
| Stretching method | | | Simultaneous biaxial | Sequential biaxial | Simultaneous biaxial | Simultaneous biaxial | Sequential biaxial |
| Stretching ratio (MD × TD) | times | | 10 × 10 | 10 × 10 | 10 × 10 | 10 × 10 | 10 × 10 |
| Stretching temperature | °C | | 115 | 115 | 115 | 115 | 115 |
| Thermal fixing temperature | °C | | 120 | 120 | 120 | 120 | 120 |
| Thermal fixing time | min | | 10 | 10 | 10 | 10 | 10 |

Table 2

| | | | Comparative examples | | | | | |
|---|---|---|---|---|---|---|---|---|
| | | | 1 | 2 | 3 | 4 | | |
| UHPE | Mw | × 10$^5$ | 20 | 20 | 20 | 20 | | |
| | Content | parts by mass | 100 | 100 | 100 | 100 | | |
| HDPE | Mw | × 10$^5$ | - | - | - | - | | |
| | Content | parts by mass | - | - | - | - | | |
| Resin concentration | Mass% | | 10 | 10 | 16 | 16 | | |
| Stretching method | | | Simultaneous biaxial | Sequential biaxial | Simultaneous biaxial | Sequential biaxial | | |
| Stretching ratio (MD × TD) | times | | 5 × 5 | 5 × 5 | 5 × 5 | 5 × 5 | | |

19

(continued)

|  |  | Comparative examples | | | | | |
|---|---|---|---|---|---|---|---|
|  |  | 1 | 2 | 3 | 4 | | |
| Stretching temperature | °C | 115 | 115 | 115 | 115 | | |
| Thermal fixing temperature | °C | 120 | 120 | 120 | 120 | | |
| Thermal fixing time | min | 10 | 10 | 10 | 10 | | |

(Table 2 continued)

|  |  |  | Comparative examples | | | | |
|---|---|---|---|---|---|---|---|
|  |  |  | 7 | 8 | 9 | 10 | 11 |
| UHPE | Mw | $\times 10^5$ | - | - | - | 20 | 20 |
| | Content | parts by mass | - | - | - | 30 | 30 |
| HDPE | Mw | $\times 10^5$ | 3 | 3 | 3 | 3 | 3 |
| | Content | parts by mass | 100 | 100 | 100 | 70 | 70 |
| Resin concentration | | mass% | 25 | 25 | 25 | 17 | 28.5 |
| Stretching method | | | Simultaneous biaxial | Sequential biaxial | Sequential biaxial | Simultaneous biaxial | Sequential biaxial |
| Stretching ratio (MD × TD) | | times | 5 × 5 | 5 × 5 | 10 × 10 | 5 × 5 | 5 × 5 |
| Stretching temperature | | °C | 115 | 115 | 115 | 115 | 115 |
| Thermal fixing temperature | | °C | 120 | 120 | 120 | 120 | 120 |
| Thermal fixing time | | min | 10 | 10 | 10 | 10 | 10 |

Table 3

|  |  | Examples | | | | | |
|---|---|---|---|---|---|---|---|
|  |  | 1 | 2 | 3 | 4 | 5 | 6 |
| Membrane thickness | μm | 8.0 | 7.0 | 8.3 | 7.0 | 7.0 | 7.0 |
| Air permeability P1 | sec/100 cm³ | 130 | 105 | 117 | 98 | 89 | 85 |
| Air permeability P2 in terms of 10 μm | sec/100 cm³ | 163 | 150 | 141 | 140 | 127 | 121 |
| Porosity | % | 45 | 47 | 47 | 49 | 47 | 47 |
| Puncture strength | N | 3.8 | 4.1 | 3.9 | 4.2 | 3.9 | 3.3 |
| Puncture strength in terms of 10 μm | N | 4.8 | 5.8 | 4.7 | 6.0 | 5.6 | 5.0 |
| MD tensile strength at break | MPa | 211 | 283 | 208 | 262 | 235 | 240 |
| TD tensile strength at break | MPa | 204 | 262 | 238 | 292 | 260 | 265 |
| MD tensile elongation at break | % | 102 | 70 | 93 | 61 | 100 | 105 |
| TD tensile elongation at break | % | 124 | 82 | 92 | 57 | 85 | 80 |
| toughness | (MPa×%) | 46818 | 41310 | 41240 | 32602 | 45668 | 46411 |
| MD shrinkage rate at 120°C | % | 3.0 | 5.0 | 3.7 | 4.7 | 8.7 | 8.2 |

(continued)

| | | Examples | | | | | |
|---|---|---|---|---|---|---|---|
| | | 1 | 2 | 3 | 4 | 5 | 6 |
| Membrane thickness | $\mu$m | 8.0 | 7.0 | 8.3 | 7.0 | 7.0 | 7.0 |
| TD shrinkage rate at 120°C | % | 3.0 | 5.0 | 5.0 | 7.0 | 7.4 | 10.9 |
| Porometer maximum pore diameter | nm | 36 | 29.7 | 38.5 | 32 | 34 | 36 |
| Porometer average pore diameter | nm | 23 | 22 | 23 | 22 | 23 | 24 |
| Surface pore diameter (SEM) | nm | 46 | 49 | 47 | 47 | 44 | 55 |
| Surface opening ratio (SEM) | % | 19 | 20 | 20 | 17 | 19 | 19 |
| Number of surface pores (SEM) | $/\mu m^2$ | 95 | 103 | 85 | 99 | 98 | 95 |
| Number of pores (Calculation) | $/\mu m^3$ | 89 | 121 | 94 | 128 | 118 | 109 |
| $-6.7 \times 10^{-3} \times$ number of pores $(/\mu m^3) + 4.5$ | | 3.9 | 3.7 | 3.9 | 3.6 | 3.7 | 3.8 |
| $-0.06 \times$ number of surface pores $(/\mu m^2) + 9.4$ | | 3.7 | 3.2 | 4.3 | 3.5 | 3.5 | 3.7 |
| $-0.11 \times$ surface opening ratio (%) $+ 6.2$ | | 4.1 | 4.0 | 4.0 | 4.3 | 4.1 | 4.1 |
| Evaluation of foreign matter resistance | | B | A | B | A | A | B |
| Capacity retention rate | % | 67.4 | 68.6 | 68.6 | 68.8 | 67.9 | 68.9 |

(Table 3 continued)

| | | Examples | | | | |
|---|---|---|---|---|---|---|
| | | 7 | 8 | 9 | 10 | 11 |
| Membrane thickness | $\mu$m | 7.0 | 7.6 | 6.0 | 8.2 | 7.0 |
| Air permeability P1 | sec/100 cm$^3$ | 95 | 92 | 73 | 83 | 72 |
| Air permeability P2 in terms of 10 $\mu$m | sec/100 cm$^3$ | 136 | 121 | 122 | 101 | 103 |
| Porosity | % | 47 | 51 | 51 | 52 | 50 |
| Puncture strength | N | 4.1 | 4.3 | 2.8 | 3.4 | 3.1 |
| Puncture strength in terms of 10 $\mu$m | N | 5.9 | 5.7 | 4.1 | 4.1 | 4.5 |
| MD tensile strength at break | MPa | 274 | 252 | 220 | 191 | 204 |
| TD tensile strength at break | MPa | 252 | 271 | 211 | 195 | 226 |
| MD tensile elongation at break | % | 60 | 75 | 77 | 81 | 67 |
| TD tensile elongation at break | % | 78 | 80 | 79 | 82 | 73 |
| toughness | (MPa$\times$%) | 36075 | 40556 | 33572 | 31453 | 30132 |
| MD shrinkage rate at 120°C | % | 8.3 | 8.1 | 11.0 | 8.0 | 4.5 |
| TD shrinkage rate at 120°C | % | 9.0 | 13.0 | 11.0 | 7.0 | 6.6 |
| Porometer maximum pore diameter | nm | 32 | 36 | 31 | 38 | 40 |
| Porometer average pore diameter | nm | 23 | 25 | 21 | 27 | 28 |
| Surface pore diameter (SEM) | nm | 47 | 50 | 50 | 54 | 52 |
| Surface opening ratio (SEM) | % | 19 | 19 | 20 | 21 | 16 |
| Number of surface pores (SEM) | $/\mu m^2$ | 113 | 105 | 101 | 95 | 88 |
| Number of pores (Calculation) | $/\mu m^3$ | 114 | 94 | 184 | 80 | 83 |
| $-6.7 \times 10^{-3} \times$ number of pores $(/\mu m^3) + 4.5$ | | 3.7 | 3.9 | 3.3 | 4.0 | 3.9 |
| $-0.06 \times$ number of surface pores $(/\mu m^2) + 9.4$ | | 2.6 | 3.1 | 3.3 | 3.7 | 4.1 |

(continued)

|  |  | Examples | | | | |
|---|---|---|---|---|---|---|
|  |  | 7 | 8 | 9 | 10 | 11 |
| -0.11 × surface opening ratio (%) + 6.2 |  | 4.1 | 4.2 | 4.0 | 3.9 | 4.4 |
| Evaluation of foreign matter resistance |  | A | A | A | B | B |
| Capacity retention rate | % | 69.3 | 69.2 | 71.7 | 68.7 | 70.6 |

Table 4

|  |  | Comparative examples | | | |  |  |
|---|---|---|---|---|---|---|---|
|  |  | 1 | 2 | 3 | 4 |  |  |
| Membrane thickness | μm | 9 | 11 | 14 | 14 |  |  |
| Air permeability P1 | sec/100 cm$^3$ | 290 | 180 | 215 | 213 |  |  |
| Air permeability P2 in terms of 10 μm | sec/100 cm$^3$ | 341 | 164 | 158 | 152 |  |  |
| Porosity | % | 37 | 44 | 45 | 46 |  |  |
| Puncture strength | N | 2.7 | 3.1 | 3.9 | 4.3 |  |  |
| Puncture strength in terms of 10 μm | N | 3.2 | 2.9 | 2.8 | 3.1 |  |  |
| MD tensile strength at break | MPa | 188 | 135 | 144 | 143 |  |  |
| TD tensile strength at break | MPa | 164 | 152 | 129 | 155 |  |  |
| MD tensile elongation at break | % | 175 | 180 | 160 | 187 |  |  |
| TD tensile elongation at break | % | 180 | 165 | 165 | 140 |  |  |
| toughness | (MPa×%) | 62430 | 49353 | 44265 | 48467 |  |  |
| MD shrinkage rate at 120°C | % | 1.2 | 2.2 | 6.0 | 5.5 |  |  |
| TD shrinkage rate at 120°C | % | 1.5 | 2.6 | 4.1 | 6.3 |  |  |
| Porometer maximum pore diameter | nm | 43 | 44 | 39 | 39 |  |  |
| Porometer average pore diameter | nm | 21 | 22 | 24 | 20 |  |  |
| Surface pore diameter (SEM) | nm | 43 | 56 | 50 | 51 |  |  |
| Surface opening ratio (SEM) | % | 14 | 18 | 19 | 18 |  |  |
| Number of surface pores (SEM) | /μm$^2$ | 95 | 74 | 96 | 90 |  |  |
| Number of pores (Calculation) | /μm$^3$ | 66 | 72 | 48 | 76 |  |  |
| -6.7 × 10$^{-3}$ × number of pores (/μm$^3$) + 4.5 |  | 4.1 | 4.0 | 4.2 | 4.0 |  |  |
| -0.06 × number of surface pores (/μm$^2$) + 9.4 |  | 3.7 | 5.0 | 3.7 | 4.0 |  |  |
| -0.11 × surface opening ratio (%) + 6.2 |  | 4.7 | 4.2 | 4.2 | 4.2 |  |  |
| Evaluation of foreign matter resistance |  | A | B | A | A |  |  |
| Capacity retention rate | % | 53.1 | 58.9 | 56.5 | 57.8 |  |  |

(Table 4 continued)

|  |  | Comparative examples | | | | |
|---|---|---|---|---|---|---|
|  |  | 7 | 8 | 9 | 10 | 11 |
| Membrane thickness | μm | 8 | 27 | 17 | 14 | 25 |
| Air permeability P1 | sec/100 cm$^3$ | 98 | 205 | 126 | 247 | 270 |
| Air permeability P2 in terms of 10 μm | sec/100 cm$^3$ | 121 | 75 | 76 | 180 | 108 |
| Porosity | % | 45 | 55 | 57 | 42 | 52 |

(continued)

| | | Comparative examples | | | | |
|---|---|---|---|---|---|---|
| | | 7 | 8 | 9 | 10 | 11 |
| Puncture strength | N | 1.2 | 4.8 | 5.3 | 3.2 | 6.0 |
| Puncture strength in terms of 10 $\mu$m | N | 1.4 | 1.8 | 3.2 | 2.3 | 2.4 |
| MD tensile strength at break | MPa | 59 | 61 | 102 | 122 | 115 |
| TD tensile strength at break | MPa | 61 | 108 | 167 | 121 | 131 |
| MD tensile elongation at break | % | 47 | 99 | 40 | 135 | 147 |
| TD tensile elongation at break | % | 51 | 107 | 52 | 137 | 153 |
| toughness | (MPa$\times$%) | 5888 | 17525 | 12778 | 32942 | 36823 |
| MD shrinkage rate at 120°C | % | 1.1 | 4.5 | 3.9 | 3.0 | 9.6 |
| TD shrinkage rate at 120°C | % | 1.2 | 4.5 | 8.8 | 2.0 | 10.0 |
| Porometer maximum pore diameter | nm | 62 | 70 | 37 | 52 | 43 |
| Porometer average pore diameter | nm | 26 | 25 | 22 | 23 | 20 |
| Surface pore diameter (SEM) | nm | 58 | 64 | 65 | 51 | 53 |
| Surface opening ratio (SEM) | % | 18 | 18 | 19 | 15 | 17 |
| Number of surface pores (SEM) | /$\mu$m$^2$ | 69 | 63 | 80 | 76 | 75 |
| Number of pores (Calculation) | /$\mu$m$^3$ | 77 | 34 | 78 | 47 | 53 |
| -6.7 $\times$ 10$^{-3}$ $\times$ number of pores (/$\mu$m$^3$) + 4.5 | | 4.0 | 4.3 | 4.0 | 4.2 | 4.1 |
| -0.06 $\times$ number of surface pores (/$\mu$m$^2$) + 9.4 | | 5.3 | 5.6 | 4.6 | 4.9 | 4.9 |
| -0.11 $\times$ surface opening ratio (%) + 6.2 | | 4.2 | 4.2 | 4.1 | 4.5 | 4.4 |
| Evaluation of foreign matter resistance | | D | E | E | C | C |
| Capacity retention rate | % | 61.7 | 50.1 | 66.3 | 60.3 | 55 |

From the results of Tables 3 and 4, it was found that the polyolefin microporous membrane of the present invention had excellent output characteristics and strength.

Although the present invention has been described in detail with reference to specific embodiments, it will be apparent to those skilled in the art that various modifications and variations are possible without departing from the scope of the present invention as defined by the claims. The present application is based on Japanese Patent Application No. 2019-068113 filed on March 29, 2019, Japanese Patent Application No. 2019-068114 filed on March 29, 2019, and Japanese Patent Application No. 2019-068115 filed on March 29, 2019.

**Claims**

1.   A polyolefin microporous membrane, wherein:

(i) a puncture strength Y (N) in terms of a membrane thickness of 10 $\mu$m and the number Z of surface pores per unit area (/$\mu$m$^2$) satisfy a relationship of the following formula (2):

$$Y\ (N) \geq -0.06 \times Z\ (/\mu m^2) + 9.4 \qquad \text{Formula (2)};$$

wherein the puncture strength Y is measured by the method of the description and the number Z of surface pores is measured by a scanning electron microscope observation,
or
(ii) a puncture strength Y (N) in terms of a membrane thickness of 10 $\mu$m and a surface opening ratio W (%) satisfy a relationship of the following formula (3):

$$Y\,(N) \geq -0.11 \times W\,(\%) + 6.2 \qquad \text{Formula (3),}$$

and

the surface opening ratio W is 5% or more and 45% or less, and
wherein in (i) or (ii) the puncture strength Y is 3.0 N or more, and

wherein the puncture strength Y and the opening ratio W are each measured by the respective method of the description.

2. The polyolefin microporous membrane according to claim 1 (i), wherein the number of surface pores is $40/\mu m^2$ or more and $135/\mu m^2$ or less, wherein the number of surface pores is measured by the method of the description.

3. The polyolefin microporous membrane according to any one of claims 1 to 2, having an average pore diameter of less than 40 nm, wherein the average pore diameter is measured by the method of the description.

4. The polyolefin microporous membrane according to any one of claims 1 to 3, wherein both a tensile strength at break in an MD direction and a tensile strength at break in a TD direction are 180 MPa or more, wherein the tensile strength at break is measured by the method of the description.

5. The polyolefin microporous membrane according to any one of claims 1 to 4, having a toughness of 35,000 (MPa×%) or more, wherein the toughness is measured by the method of the description.

6. The polyolefin microporous membrane according to any one of claims 1 to 5, having a porosity of 40% or more and less than 60%, wherein the porosity is measured by the method of the description.

7. The polyolefin microporous membrane according to any one of claims 1 to 6, wherein a thermal shrinkage rate at 120°C in an MD direction, wherein the thermal shrinkage rate is measured by thermomechanical analysis, as described in the description, and is 15% or less.

8. The polyolefin microporous membrane according to any one of claims 1 to 7, wherein the polyolefin as the microporous membrane is polyethylene.

9. A battery separator, comprising the polyolefin microporous membrane according to any one of claims 1 to 8.

10. A secondary battery, comprising the battery separator according to claim 9.

11. A method of producing the polyolefin microporous membrane according to any one of claims 1 to 8, the method comprising:

preparing a solution in which a content of ultrahigh molecular weight polyethylene having a weight average molecular weight, which weight average molecular weight is measured by the method of the description, of 1,000,000 or more is 5 to 30 mass% and a content of the polyolefin resin is less than 30 mass% when a total of the solvent and the polyolefin resin is 100 mass%;
forming an unstretched gel sheet by extruding the solution from a die and performing cooling and solidifying;
obtaining a stretched film by stretching the gel sheet at a temperature ranging from a crystal dispersion temperature of the gel sheet to a melting point of the gel sheet + 10°C such that an area magnification is 40 times or more;
extracting a plasticizer from the stretched film and drying the stretched film; and
performing at least one of heat treatment of the stretched film after drying and re-stretching of the stretched film after drying.

**Patentansprüche**

1. Mikroporöse Polyolefinmembran, worin:

(i) eine Durchschlagfestigkeit Y (N) in Bezug auf eine Membrandicke von 10 $\mu$m und die Anzahl Z von Oberflächenporen pro Einheitsfläche (/$\mu$m$^2$) eine Beziehung der folgenden Formel (2) erfüllen:

$$Y (N) \geq -0,06 \times Z \ (/\mu m^2) + 9,4 \qquad \text{Formel (2);}$$

wobei die Durchschlagfestigkeit Y durch das Verfahren der Beschreibung gemessen wird und die Anzahl Z von Oberflächenporen durch eine Rasterelektronenmikroskopbeobachtung gemessen wird, oder
(ii) eine Durchschlagfestigkeit Y(N) in Bezug auf eine Membrandicke von 10 $\mu$m und ein Oberflächenöffnungs- verhältnis W (%) eine Beziehung der folgenden Formel (3) erfüllen:

$$Y (N) \geq -0,11 \times W \ (\%) + 6,2 \qquad \text{Formel (3);}$$

und
wobei das Oberflächenöffnungsverhältnis W 5 % oder mehr und 45 % oder weniger beträgt und
wobei die Durchschlagfestigkeit Y in (i) oder (ii) 3,0 N oder mehr beträgt und
wobei die Durchschlagfestigkeit Y und das Öffnungsverhältnis W jeweils durch das entsprechende Verfahren der Beschreibung gemessen werden.

2. Mikroporöse Polyolefin-Membran nach Anspruch 1 (i), wobei die Anzahl von Oberflächenporen 40/$\mu$m$^2$ oder mehr und 135/$\mu$m$^2$ oder weniger beträgt, wobei die Anzahl von Oberflächenporen durch das Verfahren der Beschreibung gemessen wird.

3. Mikroporöse Polyolefin-Membran nach einem der Ansprüche 1 bis 2, die einen mittleren Porendurchmesser von weniger als 40 nm aufweist, wobei der mittlere Porendurchmesser durch das Verfahren der Beschreibung gemessen wird.

4. Mikroporöse Polyolefin-Membran nach einem der Ansprüche 1 bis 3, wobei sowohl eine Reißfestigkeit in MD-Richtung als auch eine Reißfestigkeit in TD-Richtung 180 MPa oder mehr betragen, wobei die Reißfestigkeit durch das Verfahren der Beschreibung gemessen wird.

5. Mikroporöse Polyolefin-Membran nach einem der Ansprüche 1 bis 4, die eine Zähigkeit von 35.000 (MPa$\times$%) oder mehr aufweist, wobei die Zähigkeit durch das Verfahren der Beschreibung gemessen wird.

6. Mikroporöse Polyolefin-Membran nach einem der Ansprüche 1 bis 5, die eine Porosität von 40 % oder mehr und weniger als 60 % aufweist, wobei die Porosität durch das Verfahren der Beschreibung gemessen wird.

7. Mikroporöse Polyolefin-Membran nach einem der Ansprüche 1 bis 6, wobei eine thermische Schrumpfungsrate bei 120 °C in MD-Richtung 15 % oder weniger beträgt, wobei die thermische Schrumpfungsrate durch thermomechanische Analyse wie in der Beschreibung beschrieben gemessen wird.

8. Mikroporöse Polyolefin-Membran nach einem der Ansprüche 1 bis 7, wobei es sich bei dem Polyolefin als mikroporöse Membran um Polyethylen handelt.

9. Batterieseparator, umfassend eine mikroporöse Polyolefinmembran nach einem der Ansprüche 1 bis 8.

10. Sekundärbatterie, umfassend einen Batterieseparator nach Anspruch 9.

11. Verfahren zum Herstellen einer mikroporösen Membran nach einem der Ansprüche 1 bis 8, wobei das Verfahren Folgendes umfasst:

Herstellen einer Lösung, in der ein Gehalt eines Polyethylens mit ultrahohem Molekulargewicht, das ein gewichtsmittleres Molekulargewicht, welches gewichtsmittleres Molekulargewicht durch das Verfahren der Erfindung gemessen wird, von 1.000.000 oder mehr aufweist, 5 bis 30 Masse-% beträgt und ein Gehalt von Polyolefinharz weniger als 30 Masse-% beträgt, wenn das Lösungsmittel und das Polyolefinharz zusammen 100 Masse-% ausmachen;
Bilden einer ungedehnten Gelfolie durch Extrudieren der Lösung aus einem Formwerkzeug und Durchführen von Kühlen und Härten;

Erhalten einer gedehnten Folie durch Dehnen der Gelfolie bei einer Temperatur, die von einer Kristalldispersionstemperatur der Gelfolie bis zu einem Schmelzpunkt der Gelfolie + 10 °C reicht, sodass eine Flächenvergrößerung das 40-Fache oder mehr beträgt;
Extrahieren eines Weichmachers aus der gedehnten Folie und Trocknen der gedehnten Folie; und
Durchführen von zumindest einem aus einer Wärmebehandlung der gedehnten Folie nach dem Trocknen und erneutem Dehnen der gedehnten Folie nach dem Trocknen.

**Revendications**

1.  Membrane microporeuse de polyoléfine, dans laquelle :

    (i) une résistance à la perforation Y (N) en termes d'épaisseur de membrane de 10 um et le nombre Z de pores de surface par unité de surface ($/\mu m^2$) satisfont une relation de la formule suivante (2) :

    $$Y\ (N)\ \geq\ -0,06\ x\ Z\ (/\mu m^2)\ +\ 9,4 \qquad Formule\ (2)\ ;$$

    dans laquelle la résistance à la perforation Y est mesurée par le procédé de la description et le nombre Z de pores de surface est mesuré par une observation au microscope électronique à balayage,
    ou
    (ii) une résistance à la perforation Y (N) en termes d'épaisseur de membrane de 10 $\mu$m et

    un rapport d'ouverture de surface W (%) satisfont une relation de la formule (3) suivante :

    $$Y\ (N)\ \geq\ -0,11\ x\ W\ (\%)\ +\ 6,2\ Formule\ (3),$$

    et
    le taux d'ouverture de surface W est de 5 % ou plus et de 45 % ou moins, et
    dans laquelle dans (i) ou (ii), la résistance à la perforation Y est de 3,0 N ou plus, et
    dans laquelle la résistance à la perforation Y et le taux d'ouverture W sont chacun mesurés par le procédé respectif de la description.

2.  Membrane microporeuse de polyoléfine selon la revendication 1 (i), dans laquelle le nombre de pores de surface est de 40/$\mu m^2$ ou plus et de 135/$\mu m^2$ ou moins, dans laquelle le nombre de pores de surface est mesuré par le procédé de la description.

3.  Membrane microporeuse de polyoléfine selon l'une quelconque des revendications 1 à 2, présentant un diamètre de pore moyen inférieur à 40 nm, dans laquelle le diamètre de pore moyen est mesuré par le procédé de la description.

4.  Membrane microporeuse de polyoléfine selon l'une quelconque des revendications 1 à 3, dans laquelle à la fois une résistance à la traction à la rupture dans une direction MD et une résistance à la traction à la rupture dans une direction TD sont de 180 MPa ou plus, dans laquelle la résistance à la traction à la rupture est mesurée par le procédé de la description.

5.  Membrane microporeuse de polyoléfine selon l'une quelconque des revendications 1 à 4, présentant une ténacité de 35 000 (MPa $\times$ %) ou plus, dans laquelle la ténacité est mesurée par le procédé de la description.

6.  Membrane microporeuse de polyoléfine selon l'une quelconque des revendications 1 à 5, présentant une porosité de 40 % ou plus et inférieure à 60 %, dans laquelle la porosité est mesurée par le procédé de la description.

7.  Membrane microporeuse de polyoléfine selon l'une quelconque des revendications 1 à 6, dans laquelle un taux de rétrécissement thermique à 120 °C dans une direction MD, dans laquelle le taux de retrait thermique est mesuré par analyse thermomécanique, comme décrit dans la description, et est de 15 % ou moins.

8.  Membrane microporeuse de polyoléfine selon l'une quelconque des revendications 1 à 7, dans laquelle la polyoléfine en tant que membrane microporeuse est du polyéthylène.

9. Séparateur de batterie, comprenant la membrane microporeuse de polyoléfine selon l'une quelconque des revendications 1 à 8.

10. Batterie secondaire, comprenant le séparateur de batterie selon la revendication 9.

11. Procédé de production de la membrane microporeuse de polyoléfine selon l'une quelconque des revendications 1 à 8, le procédé comprenant les étapes consistant à :

preparer une solution dans laquelle une teneur en polyéthylène à poids moléculaire ultra-élevé présentant un poids moléculaire moyen en poids, lequel poids moléculaire moyen en poids est mesuré par le procédé de la description, de 1 000 000 ou plus est de 5 à 30 % en masse et une teneur en résine de polyoléfine est inférieure à 30 % en masse lorsqu'un total du solvant et de la résine de polyoléfine est de 100 % en masse ;

former une feuille de gel non étirée en extrudant la solution à partir d'une filière et en effectuant un refroidissement et une solidification ;

obtenir un film étiré en étirant la feuille de gel à une température dans une plage allant d'une température de dispersion cristalline de la feuille de gel à un point de fusion de la feuille de gel + 10°C de sorte qu'un grossissement de surface soit de 40 fois ou plus ;

extraire un plastifiant à partir du film étiré et sécher le film étiré ; et

effectuer au moins un parmi un traitement thermique du film étiré après séchage et un nouvel étirage du film étiré après séchage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017140840 A
- JP 2003231772 A
- JP 2011192529 A
- JP 2003086162 A
- JP 2012048987 A
- JP 2006124652 A
- JP 2018147885 A
- JP 2018147690 A
- JP 2012102199 A
- JP 2019068113 A
- JP 2019068114 A
- JP 2019068115 A